(19) Europäisches Patentamt
European Patent Office
Office européen des brevets

(11) **EP 4 708 848 A1**

(12) **EUROPEAN PATENT APPLICATION**
published in accordance with Art. 153(4) EPC

(43) Date of publication:
**11.03.2026 Bulletin 2026/11**

(21) Application number: **24858287.6**

(22) Date of filing: **12.08.2024**

(51) International Patent Classification (IPC):
*H04N 19/00* $^{(2014.01)}$

(52) Cooperative Patent Classification (CPC):
**H04N 19/172; H04N 19/00; H04N 19/105;
H04N 19/109; H04N 19/124; H04N 19/139;
H04N 19/147; H04N 19/154; H04N 19/156;
H04N 19/176; H04N 19/517; H04N 19/52;
H04N 19/58**

(86) International application number:
**PCT/CN2024/111501**

(87) International publication number:
**WO 2025/044744 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 CN 202311095266**

(71) Applicant: **Tencent Technology (Shenzhen)
Company Limited
Shenzhen, Guangdong 518057 (CN)**

(72) Inventor: **ZHANG, Peihan
Shenzhen, Guangdong 518057 (CN)**

(74) Representative: **EP&C
P.O. Box 3241
2280 GE Rijswijk (NL)**

(54) **MULTIMEDIA DATA CODING METHOD AND APPARATUS, READABLE MEDIUM AND ELECTRONIC DEVICE**

(57)     Disclosed in the present application are a multimedia data coding method and apparatus, a computer readable medium and an electronic device. The method comprises: according to a long-term reference frame corresponding to a current multimedia frame to be coded in multimedia data, coding said current multimedia frame to obtain a current coded multimedia frame; acquiring the coding quality of the long-term reference frame, and calculating the coding quality of the current coded multimedia frame; according to a motion vector corresponding to a coding block in the current coded multimedia frame, determining the type of the current coded multimedia frame; and, according to the coding quality of the current coded multimedia frame, the type of the current coded multimedia frame and the coding quality of the long-term reference frame, updating the long-term reference frame. The technical solution provided in the embodiments of the present application ensures that updated long-term reference frames are more reasonable and accurate, thus improving the coding quality of multimedia data.

```
┌─────────────────────────────────────────────────┐  ⌐ 210
│ Encode a current multimedia frame in multimedia │
│ data with reference to a long-term reference     │
│ frame to obtain a current encoded multimedia     │
│ frame                                            │
└─────────────────────────────────────────────────┘
                       │
                       ▼
┌─────────────────────────────────────────────────┐  ⌐ 220
│ Obtain coding quality of the long-term reference│
│ frame and calculate coding quality of the current│
│ encoded multimedia frame                         │
└─────────────────────────────────────────────────┘
                       │
                       ▼
┌─────────────────────────────────────────────────┐  ⌐ 230
│ Determine a type of the current encoded          │
│ multimedia frame according to a motion vector of │
│ coding block(s) in the current encoded multimedia│
│ frame                                            │
└─────────────────────────────────────────────────┘
                       │
                       ▼
┌─────────────────────────────────────────────────┐  ⌐ 240
│ Update the long-term reference frame according to│
│ the coding quality of the current encoded        │
│ multimedia frame, the type of the current encoded│
│ multimedia frame, and the coding quality of the  │
│ long-term reference frame, and encode a to-be-   │
│ coded multimedia frame in the multimedia data    │
│ with reference to the updated long-term reference│
│ frame                                            │
└─────────────────────────────────────────────────┘
```

FIG. 2

**Description**

RELATED APPLICATION

This application claims priority to Chinese Patent Application No. 2023110952664, filed with the China National Intellectual Property Administration on August 25, 2023, and entitled "METHOD AND APPARATUS FOR CODING MULTIMEDIA DATA, READABLE MEDIUM, AND ELECTRONIC DEVICE".

FIELD OF THE TECHNOLOGY

The present disclosure belongs to the field of multimedia technology, and in particular to a method and an apparatus for coding multimedia data, a computer-readable medium, and an electronic device.

BACKGROUND OF THE DISCLOSURE

Video data is usually encoded before transmission to improve transmission efficiency. When the video data is encoded, it is usually divided into a plurality of frames, and a difference between the frames is encoded to reduce the volume of the encoded video data. Hence, selection of a reference frame during the encoding has an important impact on quality of the encoded video. Generally, when a frame is being encoded, another frame temporally close to the frame is selected as the reference frame. This coding scheme is subject to error propagation, and coding quality of the video frame gradually decreases as the encoding process proceeds. Therefore, the coding scheme needs to be improved.

SUMMARY

An objective of the present disclosure is to provide a method and an apparatus for coding multimedia data, a computer-readable medium, and an electronic device, such that coding quality of multimedia data can be improved.
An aspect of embodiments of the present disclosure provides a method for coding multimedia data, including: encoding a current multimedia frame in multimedia data with reference to a long-term reference frame to obtain a current encoded multimedia frame; obtaining coding quality of the long-term reference frame; calculating coding quality of the current encoded multimedia frame; determining a type of the current encoded multimedia frame according to a motion vector of one or more coding blocks in the current encoded multimedia frame; updating the long-term reference frame according to the coding quality of the current encoded multimedia frame, the type of the current encoded multimedia frame, and the coding quality of the long-term reference frame; and encoding a to-be-coded multimedia frame in the multimedia data with reference to the updated long-term reference frame.
An aspect of the embodiments of the present disclosure provides an apparatus for coding multimedia data, including: an encoding module, configured for encoding a current multimedia frame in multimedia data with reference to a long-term reference frame to obtain a current encoded multimedia frame; a coding-quality calculating module, configured for obtaining coding quality of the long-term reference frame, and calculating coding quality of the current encoded multimedia frame; a multimedia-frame-type calculating module, configured for determining a type of the current encoded multimedia frame according to a motion vector of one or more coding blocks in the current encoded multimedia frame; and a reference-frame updating module, configured for updating the long-term reference frame according to the coding quality of the current encoded multimedia frame, the type of the current encoded multimedia frame, and the coding quality of the long-term reference frame, and encoding a to-be-coded multimedia frame in the multimedia data with reference to the updated long-term reference frame.
In an embodiment, the coding-quality calculating module includes: a coding-cost calculating unit, configured for calculating, according to a coding manner of the current encoded multimedia frame, a coding cost of each coding block in the current encoded multimedia frame; a statistics unit, configured for calculating a coding cost of the current encoded multimedia frame according to the coding cost of each coding block; and a quality calculating unit, configured for determining the coding quality of the current encoded multimedia frame according to the coding cost of the current encoded multimedia frame, where the coding cost of the current encoded multimedia frame is in negative correlation with the coding quality.
In an embodiment, the coding-cost calculating unit includes: a first subunit, configured for, when a coding process of the current encoded multimedia frame does not comprise precoding, calculating the coding cost of each coding block in the current encoded multimedia frame according to an original coding cost of such coding block; and a second subunit, configured for, when the coding process of the current encoded multimedia frame comprises the precoding, calculating the coding cost of each coding block in the current encoded multimedia frame according to the original coding cost and a precoding cost of such coding block.
In an embodiment, the first subunit is configured for multiplying the original coding cost of such coding block by a quantization parameter of such coding block to obtain the coding cost of such coding block, where the quantization parameter enlarges the original coding cost.

In an embodiment, the second subunit is configured for: multiplying the original coding cost of such coding block by a quantization parameter of such coding block to obtain a candidate coding cost of such coding block; and calculating a weighted sum of the candidate coding cost of such coding block and the precoding cost of such coding block to obtain the coding cost of such coding block, where a weight of the candidate coding cost is greater than a weight of the precoding cost.

In an embodiment, the multimedia-frame-type calculating module includes: a first coding-block determining unit, configured for determining one or more first coding blocks from the one or more coding blocks in the current encoded multimedia frame, where amplitude of the motion vector of each first coding block is greater than preset amplitude; and a type determining unit, configured for determining the type of the current encoded multimedia frame according to a quantity of the one or more first coding blocks in the current encoded multimedia frame.

In an embodiment, the first coding-block determining unit is configured for: determining one or more candidate coding blocks, which are coded using inter-frame prediction, from the one or more coding blocks in the current encoded multimedia frame; calculating amplitude of the motion vector of each candidate coding block; and determining, in response to the amplitude of the motion vector of a candidate coding block being greater than the preset amplitude, that the candidate coding block belongs to the one or more first coding blocks.

In an embodiment, the type determining unit is specifically is configured for: calculating a ratio of the quantity of the one or more first coding blocks in the current encoded multimedia frame to a total quantity of coding blocks in the current encoded multimedia frame; in response to the ratio being less than or equal to a preset threshold, determining that the current encoded multimedia frame is a low-motion frame; and in response to the ratio being greater than a preset threshold, determining that the current encoded multimedia frame is a high-motion frame.

In an embodiment, the reference-frame updating module is configured for: in response to the current encoded multimedia frame being the low-motion frame and the coding quality of the current encoded multimedia frame being higher than the coding quality of the long-term reference frame, determining a to-be-coded multimedia frame immediately subsequent to the current multimedia frame to serve as the updated long-term reference frame.

In an embodiment, the multimedia data includes a plurality of multimedia frame groups. The reference-frame updating module is configured for, in response to a count of encoded frames reaching a preset frame quantity: setting the count of encoded frames to be zero, and updating the long-term reference frame according to the coding quality of the current encoded multimedia frame, the type of the current encoded multimedia frame, and the coding quality of the long-term reference frame. The preset frame quantity is an integer smaller than a total quantity of multimedia frames in a multimedia frame group to which the current multimedia frame belongs, and the multimedia frame group is among the plurality of multimedia frame groups.

In an embodiment, the multimedia data includes a plurality of multimedia frame groups. The apparatus further includes: a key-frame setting module, configured for determining, during encoding of a foremost frame in a multimedia frame group to which the current multimedia frame belongs, the foremost frame as the long-term reference frame, where the foremost frame is a key frame in the multimedia frame group.

In an embodiment, the reference-frame updating module is configured for, in response to the long-term reference frame being a key frame: obtaining a quality weight of the long-term reference frame, where the quality weight is in negative correlation with a time interval between the current multimedia frame and the long-term reference frame; generating first coding quality of the long-term reference frame according to the quality weight and the coding quality of the long-term reference frame, where the first coding quality of the long-term reference frame is lower than the coding quality of the long-term reference frame; and updating the long-term reference frame according to the coding quality of the current encoded multimedia frame, the type of the current encoded multimedia frame, and the first coding quality of the long-term reference frame.

In an embodiment, the coding module is configured for: calculating a difference between a total quantity of reference frames for the multimedia data and a quantity of at least one long-term reference frame for the multimedia data to obtain a quantity of short-term reference frames; determining one or more multimedia frames immediately encoded previous to the current multimedia frame as the at least one short-term reference frame; and encoding the current multimedia frame with reference to the at least one short-term reference frame and the at least one long-term reference frame comprising the long-term reference frame.

An aspect of the embodiments of the present disclosure provides an electronic device including a processor and a memory. One or more programs are stored in the memory and are configured to be executed by the processor to implement the foregoing method.

An aspect of the embodiments of the present disclosure provides a computer-readable storage medium. The computer-readable storage medium stores a computer program. The computer program is configured to be loaded and executed by a processor to implement the foregoing method.

An aspect of the embodiments of the present disclosure provides a computer program product including a computer program. The computer program is stored in a computer-readable storage medium. The computer program, when read by a processor of a computer device from the computer-readable storage medium and executed by the processor, causes the computer device to perform the foregoing method.

Herein, after the current multimedia frame is encoded, the coding quality of the long-term reference frame is obtained, the coding quality of the current encoded multimedia frame is calculated, the type of the current encoded multimedia frame is determined according to the motion vector of the coding block(s) in the current encoded multimedia frame, and the long-term reference frame is updated according to the coding quality of the current encoded multimedia frame, the type of the current encoded multimedia frame, and the coding quality of the long-term reference frame. Thereby, dynamic adjustment of the long-term reference frame is achieved during coding of the multimedia data. It is avoided that a fixed long-term reference frame cannot provide effective reference information for a temporally far-away multimedia frame, and the coding quality of the multimedia data is improved. In addition, the long-term reference frame is updated according to the coding quality and the type of the multimedia frames to ensure that the updated long-term reference frame is appropriate and accurate. Hence, the coding quality of the multimedia data is further improved.

BRIEF DESCRIPTION OF THE DRAWINGS

FIG. 1 is a schematic block diagram of exemplary system architecture according to an embodiment of the present disclosure.

FIG. 2 is a schematic flowchart of a method according to an embodiment of the present disclosure.

FIG. 3 is a schematic flowchart of a method according to another embodiment of the present disclosure.

FIG. 4 is a schematic diagram of a coding process of a multimedia frame.

FIG. 5 is a schematic flowchart of a method according to an embodiment of the present disclosure.

FIG. 6 is a schematic diagram of a reference structure according to an embodiment of the present disclosure.

FIG. 7 is a schematic diagram of a reference structure according to an embodiment of the present disclosure.

FIG. 8 is a schematic flowchart of a method according to another embodiment of the present disclosure.

FIG. 9 is a schematic diagram of a process of replacing a long-term reference frame according to an embodiment of the present disclosure.

FIG. 10 is a schematic structural block diagram of an apparatus according to an embodiment of the present disclosure.

FIG. 11 is a schematic structural block diagram of a computer system of an electronic device according to an embodiment of the present disclosure.

DESCRIPTION OF EMBODIMENTS

Exemplary implementations are described more comprehensively with reference to the accompanying drawings. However, the exemplary implementations can be implemented in a plurality of forms and are not to be construed as being limited to examples described herein. On the contrary, these implementations are provided such that the present disclosure is more comprehensive and complete, and fully conveys the concept of the exemplary implementations to a person skilled in the art.

In addition, the described features, structures, or characteristics may be combined in one or more embodiments in any proper manner. In the following descriptions, many specific details are provided for comprehensive understanding of embodiments of the present disclosure. However, a person skilled in the art is to be aware that the technical solutions in the present disclosure may be implemented without one or more of the specific details, or another method, unit, apparatus, or step may be used. In other cases, well-known methods, apparatuses, implementations, or operations are not shown or described in detail, to avoid obscuring aspects of the present disclosure.

The block diagrams shown in the accompanying drawings are merely functional entities and do not necessarily correspond to physically independent entities. To be specific, these functional entities may be implemented in a software form, or these functional entities may be implemented in one or more hardware modules or integrated circuits, or these functional entities may be implemented in different networks and/or processor apparatuses and/or microcontroller apparatuses.

The flowcharts shown in the accompanying drawings are merely exemplary descriptions, do not need to include all content and operations/steps, and do not need to be performed in the described orders either. For example, some operations/steps may be further divided, while some operations/steps may be combined or partially combined. Therefore, an actual execution order may vary depending on an actual situation.

In embodiments of the present disclosure including the embodiments of both the claims and the specification (hereinafter referred to as "all embodiments of the present disclosure"), in an involved step of determining a condition, a case in which a determining result is "equal to" may be classified into either of the determining result being "greater than" or the determining result being "less than" according to an actual requirement. "A plurality of" mentioned in the specification means two or more. The term "and/or" describes an association relationship between associated objects, and represents that three relationships may exist. For example, A and/or B may represent the following three cases: Only A exists, both A and B exist, and only B exists. The character "/" generally represents that associated objects in the context are in an "or" relationship.

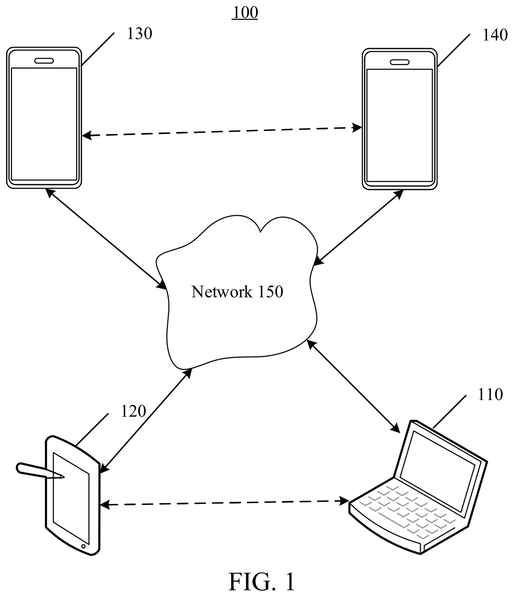

FIG. 1 is a schematic block diagram of an exemplary system architecture according to an embodiment of the present disclosure.

As shown in FIG. 1, a system architecture 100 includes a plurality of terminal apparatuses. The terminal apparatuses may be used to communicate with each other through a network 150, for example. For example, the system architecture 100 may include a first terminal apparatus 110 and a second terminal apparatus 120 that are connected to each other through the network 150. In the embodiment of FIG. 1, the first terminal apparatus 110 and the second terminal apparatus 120 perform unidirectional data transmission.

For example, the first terminal apparatus 110 may code multimedia data (e.g., a video picture stream acquired by the first terminal apparatus 110) for transmission to the second terminal apparatus 120 through the network 150, coded multimedia data is transmitted in a form of one or more coded multimedia bitstreams, and the second terminal apparatus 120 may receive the coded multimedia data from the network 150, decode the coded multimedia data to restore the multimedia data, and display multimedia content according to the restored multimedia data. For example, using a low-delay live broadcast scenario as an example, the multimedia data is a video picture stream acquired by the first terminal apparatus 110, and is referred to as video data. The first terminal apparatus 110 codes the acquired video data according to the method for coding multimedia data provided in any embodiment of the present disclosure, to generate coded video data, and transmits the coded video data to the second terminal apparatus 120 in a form of a bitstream through the network 150. The second terminal apparatus 120 receives a bitstream of the coded video data through the network 150, and decodes the received coded video data by using a decoding method corresponding to the coding method, so that the coded video data is restored to video data, and then the second terminal apparatus 120 plays or displays a corresponding video image based on the video data.

In all embodiments of the present disclosure, the system architecture 100 may include a third terminal apparatus 130 and a fourth terminal apparatus 140 that perform bidirectional transmission of the coded multimedia data. The bidirectional transmission may, for example, occur during a video conference. For bidirectional data transmission, for example, the third terminal apparatus 130 can code the multimedia data (such as the acquired video picture stream) and transmit the coded multimedia data to the fourth terminal apparatus 140 through the network 150. The third terminal apparatus 130 may further receive the coded multimedia data transmitted by the fourth terminal apparatus 140, decode the coded multimedia data to restore the multimedia data, and display the multimedia content on an accessible display apparatus according to the restored multimedia data.

In the embodiment of FIG. 1, the first terminal apparatus 110, the second terminal apparatus 120, the third terminal apparatus 130, and the fourth terminal apparatus 140 may be servers, personal computers, and smartphones, but the principles disclosed in the present disclosure are not limited thereto. The embodiment disclosed in the present disclosure is adapted to a laptop computer, a tablet computer, a media player, and/or a dedicated video conference device. The network 150 represents any quantity of networks that include, for example, wired and/or wireless communication networks, and transmit the coded multimedia data between the first terminal apparatus 110, the second terminal apparatus 120, the third terminal apparatus 130, and the fourth terminal apparatus 140. The communication network 150 may exchange data in circuit-switched and/or packet-switched channels. The network may include a telecommunication network, a local area network, a wide area network, and/or the Internet. For the purposes of the present disclosure, unless explained below, architecture and topology of the network 150 may be immaterial to operations disclosed in the present disclosure.

The method for coding multimedia data provided in the present disclosure is described in detail below with reference to specific implementations.

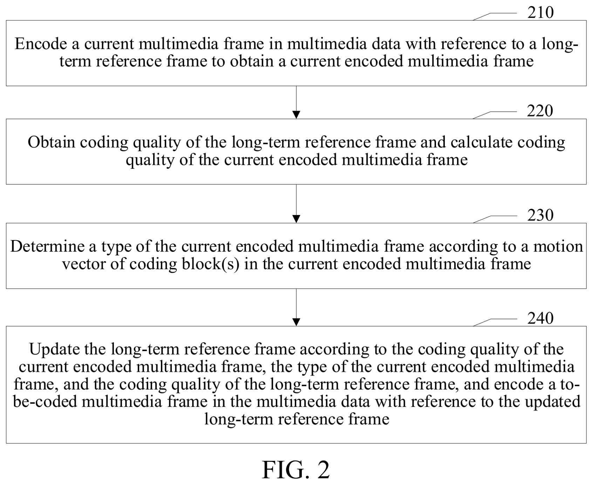

FIG. 2 is a schematic flowchart of a method according to an embodiment of the present disclosure. The method may be implemented by an apparatus for coding multimedia data provided in any embodiment of the present disclosure. The following describes a specific implementation process of the method by using the apparatus for coding multimedia data (which may be any one of the terminal apparatuses shown as an example in FIG. 1) as an execution body. In all embodiments of the present disclosure, as shown in FIG. 2, the method for coding multimedia data may comprise operations 210 to 240, which are specifically as follows.

Operation 210: Encode a current multimedia frame in multimedia data with reference to a long-term reference frame to obtain a current encoded multimedia frame.

Here the multimedia data may be data formed by a series of multimedia frames. For example, video data is data formed by a series of video frames. To encode the multimedia data, generally, each multimedia frame is sequentially coded according to a time sequence of the multimedia frames in the multimedia data. To code one multimedia frame, a corresponding reference frame needs to be obtained. The long-term reference frame is a multimedia frame that constantly serves as a reference frame during at least a part of the encoding process. The long-term reference frame is a multimedia frame having a large amount of information. For example, the long-term reference frame is a key frame in the multimedia data. The apparatus for coding multimedia data designates the long-term reference frame before encoding the current multimedia frame. During coding, the apparatus may encode according to a difference between the current multimedia frame and the long-term reference frame. After being encoded, the current multimedia frame becomes the current encoded multimedia frame.

In all embodiments of the present disclosure, the reference frame during coding of the multimedia frame includes the long-term reference frame(s) and short-term reference frame(s). A position of the short-term reference frame in the frame sequence depends on the position of the current multimedia frame in the frame sequence. The short-term reference frame is also called an ordinary reference frame. As an example, the "long-term" reference frame refers to a reference frame set for predicting (or reconstructing) multiple sequential multimedia frames, and the "short-term" reference frame refers to a reference frame set for predicting (or reconstructing) a single multimedia frame, e.g., the current multimedia frame. The reference frames of the "long-term" and the "short-term" may also be called the reference frame of a first type and the reference frame of a second type, respectively. Before the multimedia data is coded, a total quantity of the reference frames and a quantity of the long-term reference frames of the multimedia data in the coding process need to be set. The total quantity of the reference frames is a sum of the quantity of the long-term reference frames and a quantity of the short-term reference frames and may also be called a maximum quantity of reference frames. The quantity of the short-term reference frames may be obtained according to a difference between the total quantity of the reference frames and the quantity of the long-term reference frames. During coding, the long-term reference frame(s) are obtained according to the quantity of the long-term reference frames. A multimedia frame serving as the long-term reference frame is indicated by an identifier, and the multimedia frame serving as the long-term reference frame may be determined through checking the identifier. In addition, the short-term reference frame(s) are obtained according to the quantity of the short-term reference frames. Generally, the short-term reference frame is a multimedia frame encoded immediately previous to the current multimedia frame. Finally, the current multimedia frame is coded with reference to the long-term reference frame(s) and the short-term reference frame(s). For example, it is assumed that the total quantity of the reference frames is 3, and the quantity of the long-term reference frames is 1, and the long-term reference frame is the foremost frame. For the current multimedia frame being the $t^{th}$ frame, the short-term reference frames are the $(t-1)^{th}$ frame and the $(t-2)^{th}$ frame. After the $t^{th}$ frame is coded, the $(t+1)^{th}$ frame would be coded. The short-term reference frames for the $(t+1)^{th}$ frame are thus the $t^{th}$ frame and the $(t-1)^{th}$ frame that have been encoded. If the long-term reference frame is not updated for the $(t+1)^{th}$ frame, the long-term reference frame is still the foremost frame.

In all embodiments of the present disclosure, the apparatus for coding multimedia data may record a reference frame in a coding process by using a reference frame list. The reference frame may be divided into a long-term reference frame list and a short-term reference frame list. The long-term reference frame list records identifier(s) of the long-term reference frame(s), and the short-term reference frame list records identifier(s) of the short-term reference frame(s). During the coding, the reference frame(s) can be determined by checking the reference frame list. The reference frame list may be updated in the coding process. It may be configured that only the reference frame(s) are recorded, and an identifier of the multimedia frame no longer being the reference frame is removed from the list. For example, in the foregoing example, during coding of the $t^{th}$ frame, the short-term reference frame list records short-term reference frames, including the $(t-1)^{th}$ frame and the $(t-2)^{th}$ frame. During coding of the $(t+1)^{th}$ frame, the $(t-2)^{th}$ frame is removed the short-term reference frame list, and the $t^{th}$ frame is added to the list, so that the short-term reference frames recorded in the short-term reference frame list are the $t^{th}$ frame and the $(t-1)^{th}$ frame.

Operation 220: Obtain coding quality of the long-term reference frame and calculate coding quality of the current encoded multimedia frame.

In all embodiments of the present disclosure, the apparatus for coding multimedia data may divide the multimedia frame into a plurality of coding blocks during encoding, and then encode each coding block. A manner of calculating the coding quality of the current encoded multimedia frame is the same as a manner of calculating the coding quality of the long-term reference frame, and the coding quality of the multimedia frame may be calculated according to respective coding quality of the coding blocks in the multimedia frame.

In all embodiments of the present disclosure, after encoding each multimedia frame, the apparatus for coding multimedia data may calculate coding quality of the multimedia frame and stores or records the coding quality. Before the coding quality of the current encoded multimedia frame is calculated, the coding quality of the long-term reference frame has already been calculated, and hence the coding quality of the long-term reference frame may be obtained from a storage or a record without performing the calculation again.

In all embodiments of the present disclosure, after encoding a coding block, the apparatus for coding multimedia data may calculate a coding cost of the coding block. The coding cost of the coding block generally represents a difference between the coding block and a reference coding block, where the reference coding block is a coding block in a reference frame. Therefore, the coding cost of the coding block may also represent the coding quality of the coding block. Generally, a lower coding cost of the coding block indicates higher coding quality of the coding block, and a higher coding cost of the coding block indicates lower coding quality of the coding block. A coding cost of the current encoded multimedia frame may be a sum of coding costs of the coding blocks included in the current encoded multimedia frame. Therefore, a smaller sum of the coding costs of the coding blocks indicates higher coding quality of the current encoded multimedia frame, and a larger sum of the coding costs of the coding blocks indicates lower coding quality of the current encoded multimedia frame.

Operation 230: Determine a type of the current encoded multimedia frame according to a motion vector of coding block(s) in the current encoded multimedia frame.

In all embodiments of the present disclosure, the multimedia frames may be categorized into two types: high-motion frames and low-motion frames. The high-motion frame refers to that content of the multimedia frame is subject to a large change in view of adjacent frames. For example, a multimedia frame presenting a moving object is generally a high-motion frame. The low-motion frame refers to that content of the multimedia frame is subject to a small change in view of adjacent frames, and it may be considered as presenting little motion. For example, a multimedia frame presenting a constant background is generally a low-motion frame. The motion vector of the coding block represents a motion characteristic of the coding block and can reflect a difference between the coding block and a coding block in the reference frame. Whether the content represented by the coding block presents high-motion can be determined based on the motion vector of the coding block. Accordingly, the type of the current encoded multimedia frame may be determined.

In all embodiments of the present disclosure, when determining of the type of the current encoded multimedia frame, whether the current encoded multimedia frame is the high-motion frame may be determined according to a quantity of coding blocks exhibiting a high-motion in the current encoded multimedia frame. The current encoded multimedia frame being not the high-motion frame is determined as the low-motion frame. For example, if the quantity of coding blocks exhibiting the high-motion in the current encoded multimedia frame exceeds or reaches a threshold, it is considered that the current encoded multimedia frame is the high-motion frame. If the quantity of coding block exhibiting the high-motion in the current encoded multimedia frame does not reach the threshold, it is considered that the current encoded multimedia frame is the low-motion frame.

Operation 240: Update the long-term reference frame according to the coding quality of the current encoded multimedia frame, the type of the current encoded multimedia frame, and the coding quality of the long-term reference frame, and encode a to-be-coded multimedia frame in the multimedia data with reference to the updated long-term reference frame.

Different types of multimedia frames include different information. In general, the low-motion frame includes more temporally stable information and is more suitable for being used as the reference frame. In all embodiments of the present disclosure, when updating the long-term reference frame, the apparatus for coding multimedia data may select the low-motion frame as the long-term reference frame. In addition, considering importance of the reference frame in the coding process, the apparatus for coding multimedia data may select a multimedia frame having high coding quality as the reference frame. In other words, the apparatus for coding multimedia data determines whether the current encoded multimedia frame is the low-motion frame according to the type of the current encoded multimedia frame. If the current encoded multimedia frame is the low-motion frame, it compares the coding quality of the current encoded multimedia frame with the coding quality of the long-term reference frame. If the coding quality of the current encoded multimedia frame is higher than the coding quality of the long-term reference frame, the long-term reference frame is updated. For example, the current encoded multimedia frame may serve as the updated long-term reference frame. The subsequent to-be-coded multimedia frame in the multimedia data are then coded with reference to the updated long-term reference frame. An order of executing the operation of determining whether the current encoded multimedia frame is the low-motion frame and the operation of comparing the coding quality of the current encoded multimedia frame and the coding quality of the long-term reference frame is not limited herein. For example, the type of the multimedia frame may be determined before or after the comparison of the coding quality.

Herein, after the current multimedia frame is encoded, the coding quality of the long-term reference frame is obtained, the coding quality of the current encoded multimedia frame is calculated, the type of the current encoded multimedia frame is determined according to the motion vector of the coding block(s) in the current encoded multimedia frame, and the long-term reference frame is updated according to the coding quality of the current encoded multimedia frame, the type of the current encoded multimedia frame, and the coding quality of the long-term reference frame. Thereby, dynamic adjustment of the long-term reference frame is achieved during coding of the multimedia data. It is avoided that a fixed long-term reference frame cannot provide effective reference information for a temporally far-away multimedia frame, and the coding quality of the multimedia data is improved. In addition, the long-term reference frame is updated according to the coding quality and the type of the multimedia frames to ensure that the updated long-term reference frame is appropriate and accurate. Hence, the coding quality of the multimedia data is further improved.

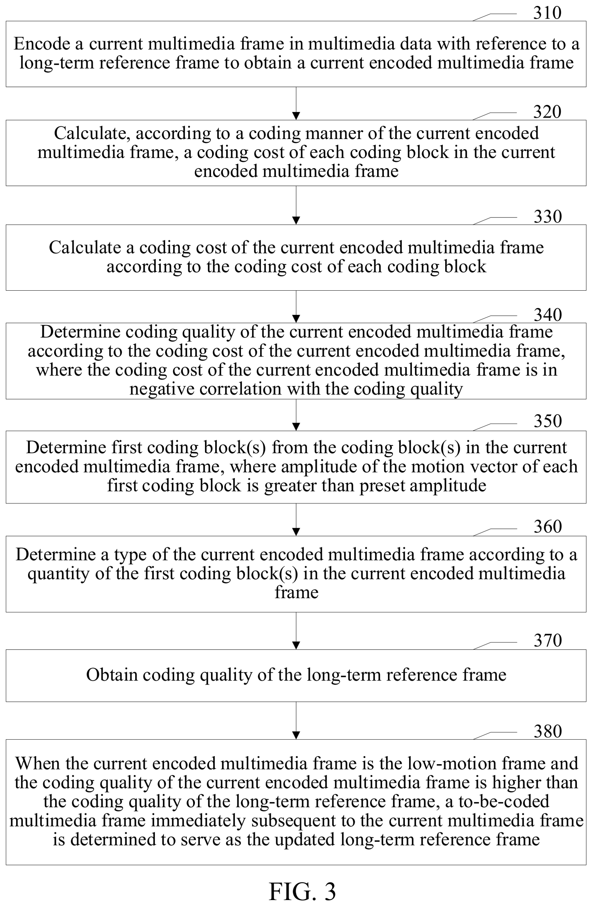

FIG. 3 is a schematic flowchart of a method according to an embodiment of the present disclosure. This embodiment is a further refinement of the foregoing embodiments. In all embodiments of the present disclosure, as shown in FIG. 3, the method for coding multimedia data provided may include operations 310 to 380, which are specifically as follows.

Operation 310: Encode a current multimedia frame in multimedia data with reference to a long-term reference frame to obtain a current encoded multimedia frame.

A process of encoding the current multimedia frame in this operation is the same as operation 210 in the foregoing embodiment, and details are not described herein again.

Operation 320: Calculate, according to a coding manner of the current encoded multimedia frame, a coding cost of each coding block in the current encoded multimedia frame.

In all embodiments of the present disclosure, there may be two coding manners according to whether a coding process of the current encoded multimedia frame comprises precoding. A first coding manner is that the precoding is enabled, and a second coding manner in which the precoding is disabled. In the precoding (e.g., a lookahead process), a quantization parameter for a discrete cosine transform is configured in the precoding of the multimedia frame. The multimedia data is scaled in the precoding to increase precoding speed. Taking video data as an example, the precoding comprises halving a width and a height of a video image. For example, the original size of the video image is 1920*1080, and the image is first shrunk to 960*540 and then subject to the precoding (e.g., a lookahead process) under the size of 960*540. A coding cost under the first coding manner is different from a coding cost under the second coding manner.

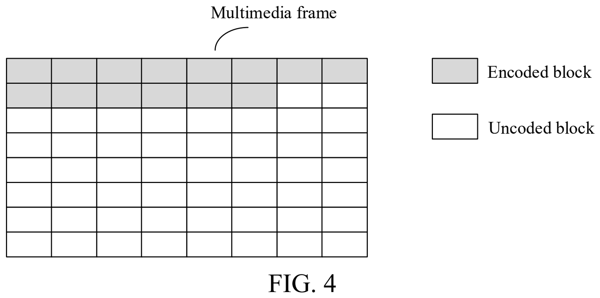

For example, FIG. 4 is a schematic diagram of a coding process of a multimedia frame. As shown in FIG. 4, during coding, the apparatus for coding multimedia data segments a multimedia frame into a plurality of coding blocks, and the coding block is also called a macroblock. The apparatus for coding multimedia data sequentially codes the coding blocks to complete the coding of a multimedia frame. For example, the apparatus for coding multimedia data codes the coding blocks sequentially in raster-scanning from left to right and from top to bottom.

In all embodiments of the present disclosure, when a coding process of the current encoded multimedia frame does not comprise precoding, the coding cost of a coding block in the current encoded multimedia frame may be calculated according to an original coding cost of such coding block, and when the coding process of the current encoded multimedia frame comprises the precoding, the coding cost of the coding block in the current encoded multimedia frame may be calculated according to the original coding cost and a precoding cost of such coding block. That is, when the precoding is not utilized in the encoding, the original coding cost of the coding block is obtained after the precoding , and the coding cost is calculated according to the original coding cost. When the precoding is utilized in the encoding, two coding costs of the coding block are obtained after encoding. One is the original coding cost, and the other is the precoding cost. In such case, the coding cost needs to be calculated according to the two coding costs.

A manner of calculating the original coding cost of the coding block is not limited herein, and a manner of calculating the precoding cost of the coding block is not limited either. In all embodiments of the present disclosure, the original coding cost and the precoding cost of the coding block may be calculated through an algorithm of sum of absolute differences (SAD), or the original coding cost and the precoding cost of the coding block may be calculated through an algorithm of sum of absolute transformed difference algorithm. An example of calculating the original coding cost and the precoding cost of the coding block through the SAD algorithm is as shown by following equations (1) and (2).

$$P = \sum_{x=0}^{m-1} \sum_{y=0}^{n-1} \left| f(x, y) - g(x, y) \right| \tag{1}$$

$$P' = \sum_{x=0}^{m'-1} \sum_{y=0}^{n'-1} \left| h(x, y) - d(x, y) \right| \tag{2}$$

In the above equation (1), m and n represent dimensions of the coding block and its reference coding block. For example, the sizes of the coding block and the reference coding block are both 16*16. $f(x, y)$ represents a pixel value of the coding block at a pixel position $(x, y)$, and $g(x, y)$ represents a pixel value of the reference coding block at the pixel position $(x, y)$. P represents the original coding cost of the coding block. In other words, the original coding cost is a value obtained as follows. After a video frame is encoded, an absolute difference between a pixel value of the coding block and a pixel value of the reference coding block is calculated at each pixel position, and the absolute differences at all pixel positions are added. Here a coding manner is not limited. For example, the coding block may be predicted using an intra-frame DC mode ("DC" represents a direct current component) or an inter-frame SKIP mode (SKIP represents skipping).

Hence, the precoding includes two processes. The first process is scaling (that is, down sampling) the multimedia data to obtain the scaled multimedia data, and the second process is encoding the scaled multimedia data. Accordingly, m' and n' in formula (2) represent dimensions of the scaled coding block and the scaled reference coding block. For example, the sizes of the coding block and the reference coding block are both 16* 16, and a scaling factor is 2. In such case, the sizes of the scaled coding block and the scaled reference coding block are both 8*8. $h(x, y)$ represents a pixel value of the scaled coding block at a pixel position $(x, y)$, and $d(x, y)$ represents a pixel value of the scaled reference coding block at the pixel position $(x, y)$. P' represents the precoding cost of the coding block. In other words, the precoding cost is a value obtained as follows. After a video frame is precoded, an absolute difference between a pixel value of the scaled coding block and a pixel value of the scaled reference coding block is calculated at each pixel position, and the absolute differences at all pixel positions are added.

In conclusion, when the coding process of the current encoded multimedia frame does not comprise the precoding, the original coding cost of the coding block may be calculated through equation (1). When the coding process of the current encoded multimedia frame comprises the precoding, the original coding cost of the coding block may be calculated through equation (1), and the precoding cost of the coding block may be calculated through equation (2).

In all embodiments of the present disclosure, when the coding process of the current encoded multimedia frame does not comprise the precoding, the original coding cost of the coding block may be multiplied by a quantization parameter (QP) of the coding block to obtain the coding cost of the coding block. The QP is configured for enlarging the original coding cost of the coding block, so as to obtain a larger coding cost. Since the coding cost reflects the coding quality, the larger coding cost makes a difference between multimedia frames of different coding quality more significant. Hence, in the subsequent step of updating the long-term reference frame according to the coding quality, it is easier to identify the multimedia frame with high coding quality. For example, assuming that the original coding cost of coding block 1 is 10, and the original coding cost of coding block 2 is 12. The difference between the two costs is 2, which is so small that the two coding blocks may be regarded as of the same quality. Assuming the QP of coding block 1 is 10 and the QP of coding block is 12, the coding cost of coding block 1 is enlarged to 100 after the multiplication, and the coding cost of the coding block 2 is enlarged to 144 after the multiplication. The difference between the two values is 44, which is increased in view of the case of no multiplication, and hence it can be easily recognized that the coding quality is different between coding block 1 and the coding block 2 are different. The QP should not be too large in the coding. Since the quantization parameter is negatively correlated with the coding quality, an excessively large quantization parameter introduces significant degradation of the coding quality.

In all embodiments of the present disclosure, when the coding process of the current encoded multimedia frame comprises the precoding, a candidate coding cost is calculated according to the original coding cost of the coding block in same manner as calculating the coding cost in the previous case, that is, when the coding process of the current encoded multimedia frame does not comprise the precoding. In other words, a product of the original coding cost of the coding block and the QP of the coding block is calculated as the candidate coding cost. After the precoding cost of the coding block is obtained after the precoding, a weighted sum between the candidate coding cost and the precoding cost are calculated to obtain the coding cost. In the weighed sum, a weight of the candidate coding cost is greater than a weight of the precoding cost. For example, the weight of the candidate coding cost may be range from 0.7 to 0.8, while the weight of the precoding cost ranges correspondingly from 0.3 to 0.2.

Operation 330: Calculate a coding cost of the current encoded multimedia frame according to the coding cost of each coding block.

In all embodiments of the present disclosure, after the coding cost of each coding block in the current encoded multimedia frame is calculated, statistics may be performed on the coding costs of all coding blocks to obtain the coding cost of the current encoded multimedia frame. For example, a sum of the coding costs of all coding blocks serves as the coding cost of the current encoded multimedia frame.

Operation 340: Determine coding quality of the current encoded multimedia frame according to the coding cost of the current encoded multimedia frame, where the coding cost of the current encoded multimedia frame is in negative correlation with the coding quality.

In all embodiments of the present disclosure, a mapping relationship between the coding cost and the coding quality may be pre-established, and the coding quality of the current encoded multimedia frame is determined using the mapping relationship. Alternatively, the coding cost of the current encoded multimedia frame may be directly used to derive the coding quality of the current encoded multimedia frame, as long as the coding cost is negatively correlated with the coding quality.

Operation 350: Determine first coding block(s) from the coding block(s) in the current encoded multimedia frame, where amplitude of the motion vector of each first coding block is greater than preset amplitude.

In all embodiments of the present disclosure, the first coding block may a coding block having high-motion amplitude, where the motion amplitude is represented by the amplitude of the motion vector. Therefore, amplitude of the motion vector of the coding block is calculated, and whether the coding block is the first coding block may be determined according to the amplitude of the motion vector. When the amplitude of the motion vector is greater than the preset amplitude, the motion amplitude of the coding block is determined to be large, and the coding block is the first coding block. When the amplitude of the motion vector is less than the preset amplitude, the motion amplitude of the coding block is determined to be small, and the coding block is not the first coding block. A case of the amplitude of the motion vector being equal to the preset amplitude may be classified into either of the case of being greater than the preset amplitude or the case of being less than the preset amplitude. A specific choice of such classification may be set according to an actual requirement.

In all embodiments of the present disclosure, each coding block of the multimedia frame may be coded in one of the two modes: inter-frame prediction and intra-frame prediction. The intra-frame prediction is predicting a current coding block using a coding block in the same multimedia frame, and the inter-frame prediction is predicting a current coding block using a coding block in another multimedia frame. In the coding process, it is desirable that the prediction mode with the smallest coding cost is always selected for encoding. The intra-frame prediction does not involve encoding between different multimedia frames, and the inter-frame prediction reflects a change between different multimedia frames. Therefore, a coding block using the intra-frame prediction mode usually does not have the motion vector, and a coding block using the inter-frame prediction mode has the motion vector. Accordingly, when searching for the first coding block(s), the coding block(s) using the inter-frame prediction mode may be first determined. That is, the coding block(s) using the inter-frame prediction mode may be determined as candidate coding block(s) first, and then the amplitude of the motion vector(s) of the candidate coding block(s) are calculated. When the amplitude of the motion vector of a candidate coding block is greater than the preset amplitude, the candidate coding block is determined to be the first coding block.

In all embodiments of the present disclosure, a quantity of the motion vectors of the coding block using the inter-frame prediction mode may vary according to a size of a pixel range of prediction (i.e., a pixel range utilized for prediction). Generally, when the pixel range of prediction is the same as a pixel range of the coding block, the candidate coding block has one motion vector. When the pixel range of prediction is smaller than the pixel range of the coding block, the candidate coding block has more than one motion vector. For example, it is assumed that the pixel range of the coding block is P16*16 (i.e., the coding block includes 16*16 pixels). When the pixel range of prediction is P16*16, the candidate coding block has one motion vector. When the pixel range of prediction is P8*8, the candidate coding block has more than one motion vector.

When the candidate coding block has more than one motion vector, whether the candidate coding block is the first coding block is determined according to whether the largest amplitude among the motion vectors of the candidate coding block is greater than the preset amplitude. When the largest amplitude among the motion vectors is greater than the preset amplitude, the candidate coding block is determined to be the first coding block. When the largest amplitude of the motion vectors is less than the preset amplitude, the candidate coding block is determined to be not the first coding block.

Operation 360: Determine a type of the current encoded multimedia frame according to a quantity of the first coding block(s) in the current encoded multimedia frame.

In all embodiments of the present disclosure, a multimedia frame may include a plurality of first coding blocks, and a type of the multimedia frame may be reflected by the quantity of the first coding blocks in the multimedia frame. A large quantity of the first coding blocks represents that the content of the multimedia frame changes a lot in view of adjacent frames, and it may be determined that the multimedia frame is the aforementioned high-motion frame. A small quantity of the first coding blocks represents that the content of the multimedia frame changes little in view of adjacent frames, and it may be determined that the multimedia frame is the aforementioned low-motion frame. In all embodiments of the present disclosure, the quantity of the first coding blocks in the current encoded multimedia frame may be compared with the preset threshold. When the quantity of the first coding blocks in the current encoded multimedia frame is greater than a preset threshold, it is determined that the current encoded multimedia frame is the high-motion frame. When the quantity of the first coding blocks in the current encoded multimedia frame is less than or equal to the preset threshold, it is determined that the current encoded multimedia frame is the low-motion frame.

In all embodiments of the present disclosure, a process of determining the type of the current encoded multimedia frame may comprise following steps. A ratio of the quantity of the first coding block(s) in the current encoded multimedia frame to a total quantity of coding blocks in the current encoded multimedia frame. When the ratio is less than or equal to a preset threshold, it is determined that the current encoded multimedia frame is a low-motion frame. When the ratio is greater than a preset threshold, it is determined that the current encoded multimedia frame is a high-motion frame.

Here the apparatus for coding multimedia data may determine the type of the current encoded multimedia frame according to the proportion of the first coding block(s) in the current encoded multimedia frame. The ratio of the quantity of the first coding block(s) in the current encoded multimedia frame to the total quantity of the coding blocks in the current encoded multimedia frame is the proportion of the first coding blocks in the current encoded multimedia frame. When the ratio is less than or equal to the preset threshold, it indicates that the quantity of the first coding blocks is small, and hence the current encoded multimedia frame is determined to be the low-motion frame. When the ratio is greater than the preset threshold, it indicates that the quantity of the first coding blocks is large, and hence the current encoded multimedia frame is determined to be the high-motion frame.

Operation 370: Obtain coding quality of the long-term reference frame.

A manner of obtaining the coding quality of the long-term reference frame in this operation is the same as the manner of obtaining or calculating the coding quality of the long-term reference frame in the foregoing operation 220, and details are not described herein again.

Operation 380: When the current encoded multimedia frame is the low-motion frame and the coding quality of the current encoded multimedia frame is higher than the coding quality of the long-term reference frame, a to-be-coded multimedia frame immediately subsequent to the current multimedia frame is determined to serve as the updated long-term reference frame.

When the current encoded multimedia frame is the low-motion frame and the coding quality of the current encoded multimedia frame is higher than the coding quality of the long-term reference frame, it indicates that a multimedia frame with better coding quality has been encoded. In this case, the long-term reference frame may be updated to be the multimedia frame with better coding quality. When the coding cost is used to represent the coding quality, the coding cost of the current encoded multimedia frame being less than the coding cost of the long-term reference frame indicates that the coding quality of the current encoded multimedia frame is higher than the coding quality of the long-term reference frame.

Encoding of the multimedia data includes two parts. One is encoding syntax element(s), and the other is encoding the pure multimedia data. The encoded syntax element and the encoded multimedia data jointly form a coded bitstream. Each multimedia frame of the multimedia data has its syntax element(s). The syntax element(s) of the multimedia frame includes description information of the multimedia frame. For example, the syntax element(s) may signal whether the multimedia frame serves the long-term reference frame, an identifier of the multimedia frame, or the like. Whether a multimedia frame serves as the long-term reference frame may be determined according to content of a syntax element of the multimedia frame. During encoding, the syntax element(s) is encoded prior to the pure multimedia data. In other words, the syntax element(s) of a multimedia frame is first encoded into a bitstream, and then the content data of the multimedia frame is encoded into the bitstream. Therefore, when the current encoded multimedia frame is obtained, the syntax element of the current encoded multimedia frame has already been written into the bitstream and cannot be changed. That is, the current encoded multimedia frame can no longer be signaled as the long-term reference frame. Luckily, in the multimedia data, there is usually high similarity between content of two adjacent multimedia frames, especially for low-motion frames. Hence, the multimedia frame encoded immediately subsequent to the current encoded multimedia frame is considered to have the coding quality and the type identical to those of the current encoded multimedia frame. Therefore, when the long-term reference frame is updated, the to-be-coded multimedia frame immediately subsequent to the current multimedia frame may serve as the updated long-term reference frame, and then the still subsequent to-be-coded multimedia frame(s) in the multimedia data would be encoded with reference to the updated long-term reference frame.

When the to-be-coded multimedia frame immediately subsequent to the current multimedia frame is being encoded, although it has already been determined to serve as the updated long-term reference frame, it may still be encoded with reference to the previous long-term reference frame, because a multimedia frame is usually not encoded with reference to itself. The long-reference frame for the still subsequent to-be-coded multimedia frame would be the updated long-term reference frame. For example, it is assumed that the current multimedia frame is the $t^{th}$ frame, and the current long-term reference frame is the $k^{th}$ frame. When the $t^{th}$ frame is the low-motion frame and the coding quality of the $t^{th}$ frame is higher than the coding quality of the $k^{th}$ frame, the $(t+1)^{th}$ frame is determined to serve as the updated long-term reference frame. During encoding of the $(t+1)^{th}$ frame, the $k^{th}$ frame still serves as the long-term reference frame for coding. During encoding of the $(t+2)^{th}$ frame and frame(s) subsequent the $(t+2)^{th}$ frame, the $(t+1)^{th}$ frame serves as the long-term reference frame for coding.

Thereby, the coding quality of the current multimedia frame may be calculated according to the coding cost of each coding block in the current multimedia frame. In this way, the coding quality may be measured to improve accuracy of determining the coding quality. The type of the current multimedia frame is determined by calculating a quantity of the first coding block(s) in the current multimedia frame, so that the type of the multimedia frame is determined based on a coding block granularity, thereby improving accuracy of determining the type of the multimedia frame. When the current encoded multimedia frame is the low-motion frame and the coding quality of the current encoded multimedia frame is higher than the coding quality of the long-term reference frame, the to-be-coded multimedia frame immediately subsequent to the current multimedia frame is used as the updated long-term reference frame, such that the long-term reference frame is updated to be the low-motion frame with higher quality, which effectively improvs the coding quality of subsequent multimedia frames.

In all embodiments of the present disclosure, the updating of the long-term reference frame may be updated on a periodical basis as follows. When a count of encoded frames reaches a preset frame quantity, the count of encoded frames is set to be zero, and the foregoing operations for updating the long-term reference frame are performed. The preset frame quantity is an integer smaller than a total quantity of multimedia frames in a multimedia frame group to which the current multimedia frame belongs.

The multimedia data may be segmented into a plurality of multimedia frame groups, and each multimedia frame group comprises a plurality of multimedia frames. During encoding of the multimedia data, the multimedia frames in each multimedia frame group are coded in sequence, that is, the multimedia frame group serves as a unit of the encoding. The periodic update of the long-term reference frame is within coding of the single multimedia frame group, and hence an update period of the long-term reference frame cannot exceed a temporal length of the multimedia frame group. Thus, the preset frame quantity is an integer greater than zero and smaller than the total quantity of the multimedia frames in the multimedia frame group to which the current multimedia frame belongs.

The quantity of the multimedia frames in one multimedia frame group can be recognized, and hence the count of encoded frames may be utilized to determine whether a moment for updating the long-term reference frame is reached. The count of encoded frames is a count of multimedia frames that have been encoded at a current moment. When the count of encoded frames reaches the preset frame quantity, it indicates that the moment for updating has been reached. In this case, the long-term reference frame is updated according to the coding quality and the type of the multimedia frame. Each time the long-term reference frame is updated, it is not necessary to use a new long-term reference frame. When the coding quality and the type of the multimedia frame do not meet requirements, the original long-term reference frame is maintained in this update. When the moment for updating is reached, the count of encoded frames is reset to be zero, such that a next cycle of updating can start. For example, the preset frame quantity is 5, the current multimedia frame is the 5th frame and is the low-motion frame, and the long-term reference frame is the 0th frame. At such time, the count of encoded frames has reached 5, such that the coding quality of the 5th frame and the coding quality of the 0th frame are compared. If the coding quality of the 5th frame is higher than the coding quality of the 0th frame, the 6th frame is determined to serve as a new long-term reference frame. For the next cycle of updating, the coding quality of the 11th frame and the coding quality of the 6th frame are compared for updating the long-term reference frame. If the coding quality of the 5th frame is lower than the coding quality of the 0th frame, the 0th frame is maintained as the long-term reference frame. For the next cycle of updating, the coding quality of the 10th frame and the coding quality of the 0th frame are compared for updating the long-term reference frame.

Thereby, updating of the long-term reference frame is triggered every preset frame quantity. The periodic update can reduce calculation resources consumed by updating the long-term reference frame while ensuring the quality of the long-term reference frame.

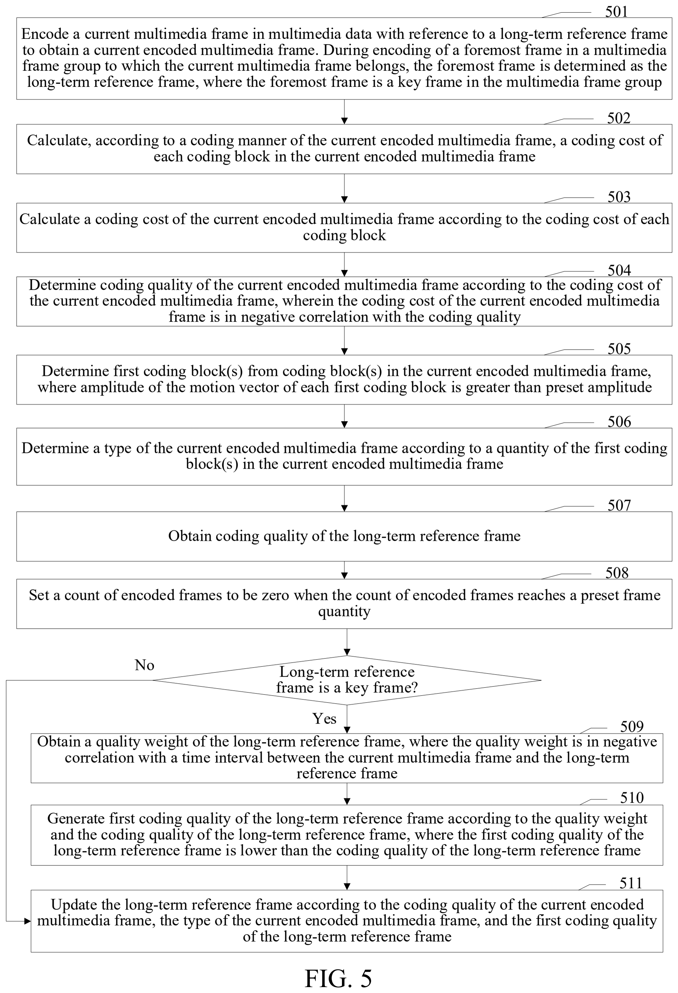

FIG. 5 is a schematic flowchart of a method according to an embodiment of the present disclosure. This embodiment is a further refinement of the foregoing embodiments. In all embodiments of the present disclosure, as shown in FIG. 5, the method for coding multimedia data may include operations 501 to 511.

Operation 501: Encode a current multimedia frame in multimedia data with reference to a long-term reference frame to obtain a current encoded multimedia frame. During encoding of a foremost frame in a multimedia frame group to which the current multimedia frame belongs, the foremost frame is determined as the long-term reference frame, where the foremost frame is a key frame in the multimedia frame group.

A process of encoding the current multimedia frame in this operation is the same as operation 210 in the foregoing embodiment, and details are not described herein again.

In all embodiments of the present disclosure, the multimedia frames in the multimedia data may be organized in a form of multimedia frame groups, and each multimedia frame group includes a plurality of multimedia frames. Each multimedia frame group represents one piece of continuous multimedia content. For example, the multimedia data is video data, a video frame group in the video data is also called a group of pictures (GOP), a GOP includes a plurality of video frames, and a GOP represents continuous video pictures. During the encoding coding, the multimedia frame group serves as a unit of segmentation. Different multimedia frame groups have different long-term reference frames. Therefore, during the encoding, the apparatus for coding multimedia data may obtain a respective long-term reference frame of the multimedia frame group to which the current multimedia frame belongs.

It is taken as an example that the multimedia data is the video data. There are three types of video frames: I frames, P frames, and B frames. The I frame represents a key frame, and encoding of the I frame refers to only a part of itself that has been encoded. The P frame represents a differential frame and is encoded as a difference between itself and an encoded frame. Encoding of the P frame refers to only encoded frame(s) prior to itself in the time domain. The B frame represents a bidirectional differential frame and is encoded using a difference between itself and a previous frame and a difference between itself and a subsequent frame. During the encoding, the B frame refers to encoded frame(s) prior to itself in the time domain and/or encoded frame(s) subsequent to itself in the time domain.

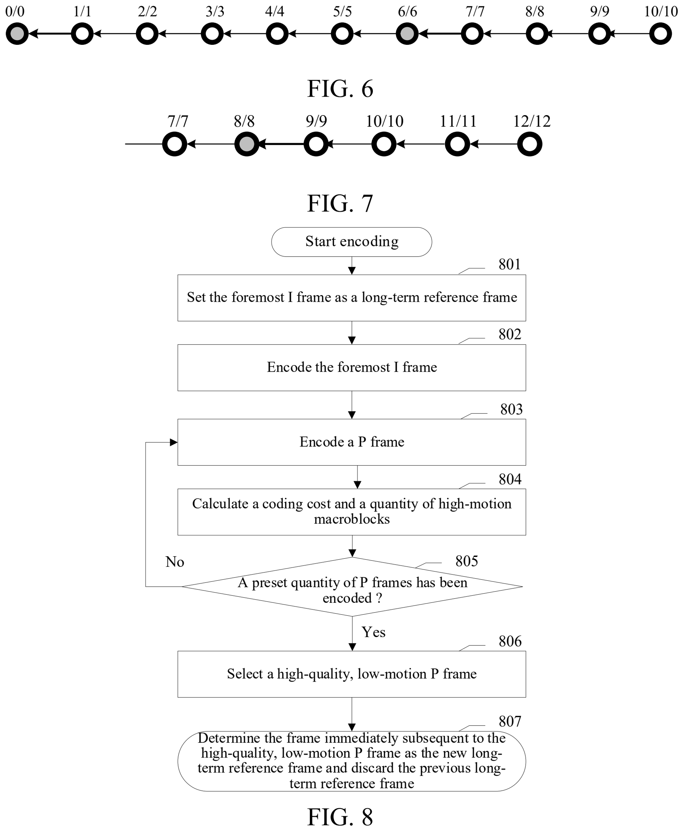

In general, the key frames are frames that retain the most complete information and have the highest quality among various multimedia frames. In all embodiments of the present disclosure, a key frame in each multimedia frame group may be set as the initial long-term reference frame of such multimedia frame group. When encoding of the multimedia frames in the multimedia frame group starts, the foremost frame of the multimedia frame group is fetched as the long-term reference frame is, where the foremost frame is the key frame. For example, a reference structure is as shown in FIG. 6. When reference is made to another frame that has been encoded, the reference may be based on a quantity of reference frames and a distance between the reference frame and the current coded frame. It is assumed that a total quantity of the reference frames is 2, there is only one long-term reference frame, and the key frame is the 0/0th frame. After the key frame is determined to serve as the initial long-term reference frame, when the 7/7th frame is the currently frame,

the 7/7th frame is coded with reference to the 0/0th frame and the 6/6th frame.

Operation 502: Calculate, according to a coding manner of the current encoded multimedia frame, a coding cost of each coding block in the current encoded multimedia frame.

Operation 503: Calculate a coding cost of the current encoded multimedia frame according to the coding cost of each coding block.

Operation 504: Determine coding quality of the current encoded multimedia frame according to the coding cost of the current encoded multimedia frame, where the coding cost of the current encoded multimedia frame is in negative correlation with the coding quality.

Operation 505: Determine first coding block(s) from coding block(s) in the current encoded multimedia frame, where amplitude of the motion vector of each first coding block is greater than preset amplitude.

Operation 506: Determine a type of the current encoded multimedia frame according to a quantity of the first coding block(s) in the current encoded multimedia frame.

Operation 507: Obtain coding quality of the long-term reference frame.

Operations 502 to 507 are the same as operations 320 to 370 in the foregoing embodiments. Details are not repeated herein.

Operation 508: Set a count of encoded frames to be zero when the count of encoded frames reaches a preset frame quantity.

Operation 508 may refer to the periodical updating of the long-term reference frame as described in the foregoing embodiments, and details are not described again herein. When the count of encoded frames does not reach the preset frame quantity, the encoding goes on without the operation of updating the long-term reference frame.

Operation 509: When the long-term reference frame being a key frame, obtain a quality weight of the long-term reference frame, where the quality weight is in negative correlation with a time interval between the current multimedia frame and the long-term reference frame.

In general, the key frames are frames that retain the most complete information and have the highest quality among various multimedia frames. When the long-term reference frame is the key frame, the quality weight may be assigned to the key frame, so that the coding quality of the key frame changes with time to avoid that the long-term reference frame is never changed to a new frame because the coding quality of the subsequent multimedia frames is always lower than the key frame. Although the key frames are frames that retain the most complete information, a frame far from the key frame has small correlation with the key frame as time goes on. In other words, it is difficult for the key frame to provide effective reference information for a remote multimedia frame. Therefore, the quality weight of the key frame is obtained according to the time interval between the current multimedia frame and the current long-term reference frame (namely, the key frame), the quality weight decreases as the time interval increases (i.e., the negative correlation). The quality weight falls within a range of (0, 1). For example, the multimedia frame group has 24 multimedia frames in total. The quality weight may be set as follows: 0.8 when the current encoded multimedia frame is the 4th frame, 0.6 when the current encoded multimedia frame is the 8th frame, 0.4 when the current encoded multimedia frame is the 12th frame, and 0.2 when the current encoded multimedia frame is the 16th frame.

When the long-term reference frame is not the key frame, the process proceeds directly to operation 511.

Operation 510: Generate first coding quality of the long-term reference frame according to the quality weight and the coding quality of the long-term reference frame, where the first coding quality of the long-term reference frame is lower than the coding quality of the long-term reference frame.

In all embodiments of the present disclosure, the quality weight may be multiplied by the coding quality of the current long-term reference frame (namely, the key frame) to obtain the first coding quality of the current long-term reference frame. Because the quality weight is less than 1, the first coding quality of the long-term reference frame is lower than the coding quality of the long-term reference frame. Assuming that the coding quality of the key frame is 100 and the quality weight is 0.8, the first coding quality of the key frame is 80.

Operation 511: Update the long-term reference frame according to the coding quality of the current encoded multimedia frame, the type of the current encoded multimedia frame, and the first coding quality of the long-term reference frame.

Operation 511 refers to operation 380 in the foregoing embodiment (note that the coding quality is replaced with the first coding quality), and details are not described herein again. When the long-term reference frame is not the key frame, the coding quality of the long-term reference frame is regarded as the first coding quality of the long-term reference frame.

Still referring to FIG. 6 for an example, the current long-term reference frame is the 0/0th frame of the key frame, and the current encoded multimedia frame is the 7/7th frame. It is assumed that the 7/7th frame is the low-motion frame, the coding quality of the 7/7th frame is 90, and coding quality of the 0/0th frame is 100. When no quality weight is assigned to the key frame, the coding quality of the 7/7th frame is lower than the coding quality of the 0/0th frame, and the long-term reference frame would not be changed. When the quality weight of 0.8 is assigned to the key frame, the first coding quality of the 0/0th frame is 80. In this case, the coding quality of the 7/7th frame is greater than the (first) coding quality of the 0/0th

frame, and the 8/8th frame may serve as the new long-term reference frame. Then, when the 9/9th frame is being encoded, the 7/7th frame serves as the long-term reference frame. The reference structure after the update is as shown in FIG. 7.

Thereby, when the key frame in the multimedia frame group is set as the long-term reference frame, a quality weight negatively correlated with time may be assigned to the key frame during the updating to avoid that the long-term reference frame is never changed to a new frame due to the coding quality of the subsequent multimedia frame always being not higher than the coding quality of the key frame. Thereby, accuracy of updating the long-term reference frame is improved.

Hereinafter implementation of the technical solution of the present disclosure is described using specific embodiments.

FIG. 8 is a schematic flowchart of a method according to an embodiment of the present disclosure. In this embodiment, a low-delay live broadcast scenario in which video compression is performed by using an H.264 coding protocol is used as an example. The multimedia data is video data. The video includes a plurality of GOPs. Each GOP includes at least one I frame, and the remaining frames may be P frames or B frames. For example, a volume of the GOP is 24, and a frame rate of a current video is 24 fps. Accordingly, there is one I frame every second, and there are 23 P or B frames between two adjacent I frames. For the low-delay live video, one GOP includes only the I frame and the P frames. That is, when the volume of the GOP is 24, each GOP includes one I frame and 23 P frames.

In all embodiments of the present disclosure, as shown in FIG. 8, the method for coding multimedia data includes the following operations.

Operation 801: Set the foremost I frame as a long-term reference frame. In other words, the 1st frame, which is the I frame in the GOP, is set as the long-term reference frame. In the H.264 standard, the I frame has a syntax element long_term_reference_flag. The syntax element is configured for indicating whether the long-term reference frame mechanism is enabled. When long_term_reference_flag is 0, it indicates that the long-term reference frame mechanism is disabled. When long_term_reference_flag is 1, it indicates that the long-term reference frame mechanism is enabled, and the I frame automatically becomes the long-term reference frame. During encoding, long_term_reference_flag equal to 1 is written into a coded bitstream to signal that the I frame becomes the long-term reference frame.

Operation 802: Encode the foremost I frame. Encoding of the I frame refers to only a part of itself that has been encoded.

Operation 803: Encode a P frame. Encoding of the P frame refers to the long-term reference frame and a short-term reference frame. The short-term reference frame is one or more previous frames closest to the P frame. During encoding of the 1st P frame, the long-term reference frame is the I frame. When a maximum quantity of reference frames is 2, reference frames for the $t^{th}$ frame may comprise the $(t-1)^{th}$ frame and the 1st frame (sometimes the 1st frame is also recorded as the $0^{th}$ frame), namely, the I frame, in a current GOP. Since the coding quality of the I frame is higher than that of the P frame, in comparison using the $(t-1)^{th}$ frame and the $(t-2)^{th}$ frame, using the I frame and the $(t-1)^{th}$ frame as reference frames would achieve higher coding quality at the $t^{th}$ frame.

Operation 804: Calculate a coding cost and a quantity of high-motion macroblocks.

During the encoding, the coding cost is calculated in different manners according to whether the precoding (e.g., the lookahead process) is enabled. During the encoding, an encoder segments a coded frame into a plurality of coding blocks, which are called macroblocks. The encoder sequentially codes the macroblocks in a raster-scanning order from left to right and from top to bottom. For example, reference is made to FIG. 4. After a macroblock is encoded, an original coding cost of the macroblock is obtained, and the original coding cost is multiplied by a QP configured for coding the macroblock to obtain a first coding cost of the macroblock. If the precoding is disabled for an encoded frame, a sum of the first coding costs of all macroblocks of the encoded frame is calculated to obtain a coding cost of the encoded frame. If the precoding is enabled for the encoded frame, in addition to calculating the coding cost (also called a first coding cost) as the case of disabling the precoding, a precoding cost of the encoded frame is further obtained during the precoding. The precoding cost of the coded frame is denoted as $\alpha$, the first coding cost of the coded frame obtained by disabling the precoding (lookahead) is denoted as $\beta$, and a coding cost $\gamma$ of the encoded frame may be calculated as a weighted sum of $\alpha$ and $\beta$. The coding cost of the encoded frame reflects the coding quality to some extent. Generally, a lower coding cost indicates better coding quality. This manner of obtaining the coding quality is simple because it includes only several multiplication operations and addition operations. Thus, it does not need to perform additional time-consuming processing and does not requires significantly large calculation power.

A quantity of the high-motion macroblocks is configured for determining whether the encoded frame is a low-motion video frame. Generally, quality of the low-motion video frame is higher than that of a high-motion video frame, and the low-motion video frame has more abundant information for reference. During the coding, inter-frame prediction and intra-frame prediction may be performed on a macroblock, and a prediction manner with a low coding cost is selected. For a macroblock on which the inter-frame prediction is selected, the macroblock has one or more motion vectors, each of which points to a reference region in the reference frame. Amplitude of each motion vector of the macroblock is obtained, and a threshold TH_MV is checked. If the largest amplitude among the motion vectors of the macroblock exceeds TH_MV, it is considered that the macroblock is a high-motion macroblock.

Operation 805: Determine whether a preset quantity of P frames has been encoded. In other words, comparison of the coding quality is performed every preset number of frames, and the comparison is configured for selecting an encoded frame with higher quality. The preset quantity actually represents an interval, in units of frames, between two adjacent comparison operations. Therefore, the preset quantity may be doted as Gap. The preset quantity Gap is an integer greater than 0, and an upper limit of the value of the preset quantity Gap is less than a quantity of frames in the GOP. If the preset quantity (Gap) of P frames has been coded, the process proceeds to operation 806. If the preset quantity (Gap) of P frames have not been coded, the process returns to operation 802 and continues encoding a subsequent P frame.

Operation 806: Select a high-quality, low-motion P frame.

The low-motion P frame refers to that the P frame belongs to the aforementioned low-motion video frame. A ration of the quantity of the high-motion macroblocks to the quantity of all the macroblocks in the encoded frame is collected, and a threshold TH_P is checked. If the ration of the high-motion macroblocks is less than TH_P, it is considered that the coded frame is a low-motion video frame. Further, the coding quality of the P frame is compared with coding quality of the current long-term reference frame, and a frame with higher quality is selected from the two as an updated long-term reference frame. If the current long-term reference frame is the I frame, the aforementioned quality weight needs to be assigned to the I frame, and then the reduced coding quality of the I frame is compared with the coding quality of the P frame.

In all embodiments of the present disclosure, the high-quality, low-motion P frame may be selected through a machine learning model to implement more accurate selection. The machine learning model may be constructed by using a plurality of statistical characteristics of the coded frame as input parameters. That is, the machine learning model is capable to select the high-quality, low-motion P frame.

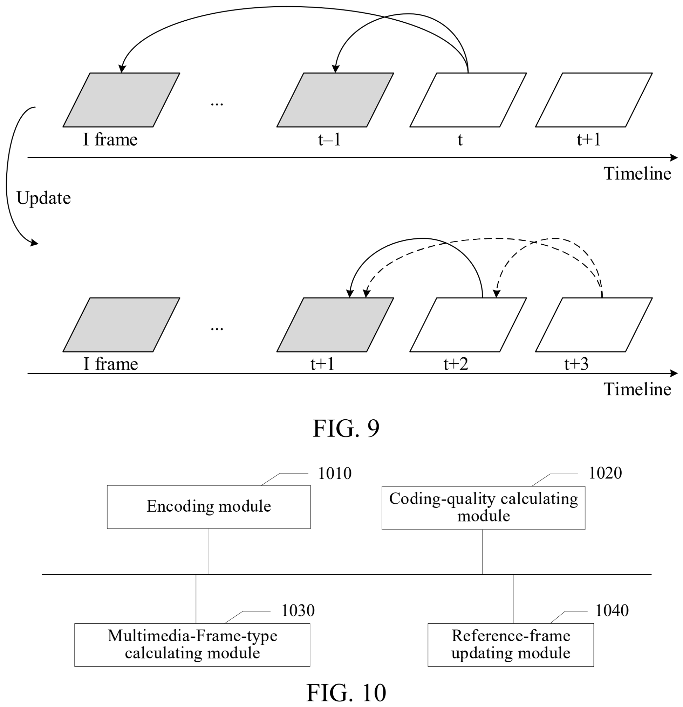

Operation 807: Determine the frame immediately subsequent to the high-quality, low-motion P frame as the new long-term reference frame and discard the previous long-term reference frame. Through the foregoing operations, the high-quality, low-motion P frame can be selected. Because a syntax element is written earlier than encoding the frame connect, the high-quality, low-motion P frame cannot be used as the long-term reference frame since the encoding of its syntax element has already completed. Quality and content of two adjacent frames are extremely similar, especially for low-motion frames, and hence the frame immediately subsequent to the high-quality, low-motion P frame, of which the encoding has not started yet, may serve as the new long-term reference frame. A syntax element adaptive_ref_pic_marking_mode_flag may be included in the code of the frame (which is another P frame) immediately subsequent to the high-quality static P frame, and the syntax element may be equal to 1 to indicate that such frame serves as the long-term reference frame. After such P frame is set as the long-term reference frame in the bitstream by using the syntax element, the I frame or the P frame initially used as the long-term reference frame is discarded from a reference frame queue. For example, FIG. 9 schematically shows process of updating the long-term reference frame according to an embodiment of the present disclosure, where the long-term reference frame is changed from the I frame to the $(t+1)^{th}$ frame.

In the technical solution of the present disclosure, for a characteristic of a low-delay live video, that is, a characteristic that there are a large number of low-motion scenes and the GOPs are short in length, the I frame with high quality is actively selected as a reference frame to improve coding quality of a subsequent video frame. In addition, by analyzing a characteristic of the coded P frame, namely, the quality of the P frame and the video content of the P frame, a high-quality, low-motion P frame is selected as the reference frame, and for the reference frame, the I frame is replaced with the P frame to provide a higher-quality reference for a subsequent P frame, thereby improving the coding quality of the subsequent video frame. Based on the foregoing two aspects, an H.264 encoder can ensure that the reference frame always has high quality, thereby improving Bjontegaard Delta-rates (BD-rates) such as a peak signal-to-noise ratio (PSNR), structural similarity index measurement (SSIM), and video multimethod assessment fusion (VMAF) of a coded video sequence. The BD-rate is an index for evaluating performance of a video coding algorithm. A negative BD-rate represents that coding performance of an optimized algorithm is improved.

It is verified by an experiment that in a low-delay scenario, using the technical solution of the present disclosure, average BD-rate gains corresponding to a PSNR, SSIM and VMAF of a test sequence coded by H264 are -0.35%, -0.4%, and -0.48%, respectively. The technical solution of the present disclosure can effectively improve coding quality of video data without increasing a delay and without increasing a bit rate. In addition, operations in calculation process in the present disclosure are simple, and calculation power consumption is basically not increased.

Each step in the method in the present disclosure is described in a specific order in the accompanying drawings, however, this does not request or imply that the steps are necessarily performed in the specific order, or all shown steps are necessarily performed so as to achieve a desired result. Additionally or alternatively, some steps may be omitted, a plurality of steps may be combined into one step for execution, and/or one step may be decomposed into a plurality of steps for execution, and the like.

Apparatus embodiments of the present disclosure are described below, and the apparatus may be configured for performing the method for coding multimedia data in the foregoing embodiments of the present disclosure. FIG. 10 is a schematic structural block diagram of an apparatus according to an embodiment of the present disclosure. In all embodiments of the present disclosure, the apparatus for coding multimedia data may include: an encoding module 1010, configured for encoding a current multimedia frame in multimedia data with reference to a long-term reference frame to obtain a current encoded multimedia frame; a coding-quality calculating module 1020, configured for obtaining coding quality of the long-term reference frame, and calculating coding quality of the current encoded multimedia frame; a multimedia-frame-type calculating module 1030, configured for determining a type of the current encoded multimedia frame according to a motion vector of one or more coding blocks in the current encoded multimedia frame; and a reference-frame updating module 1040, configured for updating the long-term reference frame according to the coding quality of the current encoded multimedia frame, the type of the current encoded multimedia frame, and the coding quality of the long-term reference frame, and encoding a to-be-coded multimedia frame in the multimedia data with reference to the updated long-term reference frame.

In all embodiments of the present disclosure, the coding-quality calculating module 1020 may include: a coding-cost calculating unit, configured for calculating, according to a coding manner of the current encoded multimedia frame, a coding cost of each coding block in the current encoded multimedia frame; a statistics unit, configured for calculating a coding cost of the current encoded multimedia frame according to the coding cost of each coding block; and a quality calculating unit, configured for determining the coding quality of the current encoded multimedia frame according to the coding cost of the current encoded multimedia frame, where the coding cost of the current encoded multimedia frame is in negative correlation with the coding quality.

In all embodiments of the present disclosure, the coding-cost calculating unit may include: a first subunit, configured for, when a coding process of the current encoded multimedia frame does not comprise precoding, calculating the coding cost of each coding block in the current encoded multimedia frame according to an original coding cost of such coding block; and a second subunit, configured for, when the coding process of the current encoded multimedia frame comprises the precoding, calculating the coding cost of each coding block in the current encoded multimedia frame according to the original coding cost and a precoding cost of such coding block.

In all embodiments of the present disclosure, the first subunit may be configured for multiplying the original coding cost of such coding block by a quantization parameter of such coding block to obtain the coding cost of such coding block, where the quantization parameter enlarges the original coding cost.

In all embodiments of the present disclosure, the second subunit may be configured for: multiplying the original coding cost of such coding block by a quantization parameter of such coding block to obtain a candidate coding cost of such coding block; and calculating a weighted sum of the candidate coding cost of such coding block and the precoding cost of such coding block to obtain the coding cost of such coding block, where a weight of the candidate coding cost is greater than a weight of the precoding cost.

In all embodiments of the present disclosure, the multimedia-frame-type calculating module 1030 may include: a first coding-block determining unit, configured for determining one or more first coding blocks from the one or more coding blocks in the current encoded multimedia frame, where amplitude of the motion vector of each first coding block is greater than preset amplitude; and a type determining unit, configured for determining the type of the current encoded multimedia frame according to a quantity of the one or more first coding blocks in the current encoded multimedia frame.

In all embodiments of the present disclosure, the first coding-block determining unit may be configured for: determining one or more candidate coding blocks, which are coded using inter-frame prediction, from the one or more coding blocks in the current encoded multimedia frame; calculating amplitude of the motion vector of each candidate coding block; and determining, in response to the amplitude of the motion vector of a candidate coding block being greater than the preset amplitude, that the candidate coding block belongs to the one or more first coding blocks.

In all embodiments of the present disclosure, the type determining unit may be for: calculating a ratio of the quantity of the one or more first coding blocks in the current encoded multimedia frame to a total quantity of coding blocks in the current encoded multimedia frame; in response to the ratio being less than or equal to a preset threshold, determining that the current encoded multimedia frame is a low-motion frame; and in response to the ratio being greater than a preset threshold, determining that the current encoded multimedia frame is a high-motion frame.

In all embodiments of the present disclosure, the reference-frame updating module 1040 may be configured for: in response to the current encoded multimedia frame being the low-motion frame and the coding quality of the current encoded multimedia frame being higher than the coding quality of the long-term reference frame, determining a to-be-coded multimedia frame immediately subsequent to the current multimedia frame to serve as the updated long-term reference frame.

In all embodiments of the present disclosure, the multimedia data may include a plurality of multimedia frame groups. The reference-frame updating module may be configured for, in response to a count of encoded frames reaching a preset frame quantity: setting the count of encoded frames to be zero, and updating the long-term reference frame according to the coding quality of the current encoded multimedia frame, the type of the current encoded multimedia frame, and the coding quality of the long-term reference frame. The preset frame quantity is an integer smaller than a total quantity of multimedia frames in a multimedia frame group to which the current multimedia frame belongs, and the multimedia frame group is among the plurality of multimedia frame groups.

In all embodiments of the present disclosure, the multimedia data may include a plurality of multimedia frame groups. The apparatus may further include: a key-frame setting module, configured for determining, during encoding of a foremost frame in a multimedia frame group to which the current multimedia frame belongs, the foremost frame as the long-term reference frame, where the foremost frame is a key frame in the multimedia frame group.

In all embodiments of the present disclosure, the reference-frame updating module 1040 may be configured for, in response to the long-term reference frame being a key frame: obtaining a quality weight of the long-term reference frame, where the quality weight is in negative correlation with a time interval between the current mfultimedia frame and the long-term reference frame; generating first coding quality of the long-term reference frame according to the quality weight and the coding quality of the long-term reference frame, where the first coding quality of the long-term reference frame is lower than the coding quality of the long-term reference frame; and updating the long-term reference frame according to the coding quality of the current encoded multimedia frame, the type of the current encoded multimedia frame, and the first coding quality of the long-term reference frame.

In all embodiments of the present disclosure, the coding module 1010 may be configured for: calculating a difference between a total quantity of reference frames for the multimedia data and a quantity of at least one long-term reference frame for the multimedia data to obtain a quantity of short-term reference frames; determining one or more multimedia frames immediately encoded previous to the current multimedia frame as the at least one short-term reference frame; and encoding the current multimedia frame with reference to the at least one short-term reference frame and the at least one long-term reference frame comprising the long-term reference frame.

Specific details of the apparatus for coding multimedia data provided in the embodiments of the present disclosure are described in detail in the corresponding method embodiments and are not described herein again.

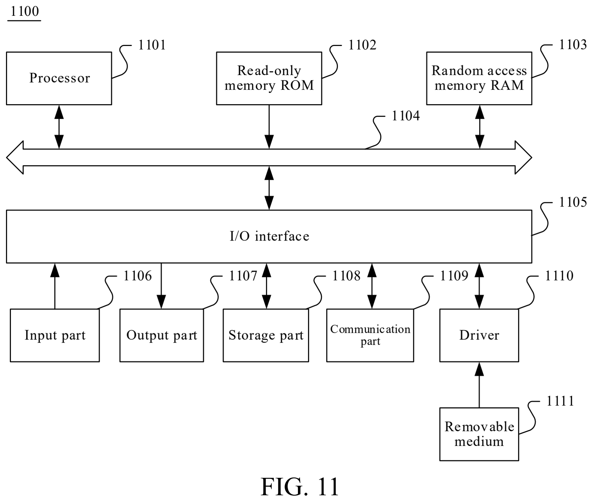

FIG. 11 is a schematic structural block diagram of a computer system of an electronic device according to an embodiment of the present disclosure.

A computer system 1100 of the electronic device shown in FIG. 11 is merely an example and does not constitute any limitation on functions and use ranges of the embodiments of the present disclosure.

As shown in FIG. 11, the computer system 1100 includes a central processing unit (CPU) 1101, which may execute various proper actions and processing based on a program stored in a read-only memory (ROM) 1102 or a program loaded from a storage part 1108 into a random-access memory (RAM) 1103. The random-access memory 1103 further has various programs and data required for system operation stored therein. The central processing unit 1101, the read-only memory 1102, and the random-access memory 1103 are connected to each other via a bus 1104. An input/output (I/O) interface 1105 is also connected to the bus 1104.

The following components are connected to the input/output interface 1105: an input part 1106 including a keyboard, a mouse, and the like; an output part 1107 including a cathode ray tube (CRT), a liquid crystal display (LCD), a speaker, and the like; a storage part 1108 including a hard disk, and the like; and a communication part 1109 including a network interface card such as a local area network card or a modem. The communication part 1109 performs communication processing by using a network such as the Internet. A driver 1110 is also connected to the input/output interface 1105 as required. A removable medium 1111, such as a magnetic disk, an optical disk, a magneto-optical disk, or a semiconductor memory, is mounted on the driver 1110 as required, so that a computer program read therefrom is installed into the storage part 1108 as required.

Particularly, according to the embodiments of the present disclosure, the processes described in the various method flowcharts may be implemented as computer software programs. For example, this embodiment of the present disclosure includes a computer program product, the computer program product includes a computer program carried on a computer-readable medium, and the computer program includes program code configured for performing the methods shown in the flowcharts. In such an embodiment, the computer program may be downloaded from a network through the communication part 1109 and installed, and/or installed from the removable medium 1111. When the computer program is executed by the central processing unit 1101, various functions defined in the system of the present disclosure are performed.

The computer-readable medium shown in this embodiment of the present disclosure may be a computer-readable signal medium or a computer-readable storage medium, or any combination of the two. The computer-readable storage medium may be, for example, but is not limited to, an electric, magnetic, optical, electromagnetic, infrared, or semiconductor system, apparatus, or device, or any combination of the above. More specific examples of the computer-readable storage media may include, but are not limited to, an electrical connection having one or more wires, a portable computer disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any suitable combination of the above. In the present disclosure, the computer-readable storage medium may be any tangible medium that includes or stores a program. The program may be used by or used in combination with an instruction execution system, apparatus, or device. Moreover, in the present disclosure, the computer-readable signal medium may include a data signal propagated in a baseband or as part of a carrier, and computer-readable program code is carried therein. A data signal propagated in such a way may assume a plurality of forms, including, but not limited to, an electromagnetic signal, an optical signal, or any suitable combination of the above. The computer-readable signal medium may alternatively be any computer-readable medium other than the computer-readable storage medium. The computer-readable medium may send, propagate, or transmit a program used by or in combination with an instruction execution system, apparatus, or device. The program code included in the computer-readable medium may be transmitted by using any suitable medium, including, but not limited to, a wireless medium, a wired medium, and the like, or any suitable combination of the above.

The flowcharts and block diagrams in the accompanying drawings illustrate possible system architectures, functions, and operations that may be implemented by a system, a method, and a computer program product according to various embodiments of the present disclosure. In this regard, each box in the flowchart or the block diagram may represent a module, a program segment, or a part of code. The module, the program segment, or the part of code includes one or more executable instructions configured for implementing specified logic functions. In some alternative implementations, the functions labeled in the boxes may alternatively occur in an order different from that labeled in the accompanying drawings. For example, two boxes shown in succession can actually be executed substantially in parallel, or sometimes the two boxes may be performed in a reverse order. This is determined according to a related function. Each box in the block diagram or the flowchart and a combination of boxes in the block diagram or the flowchart may be implemented by a dedicated hardware-based system that performs a specified function or operation, or may be implemented by a combination of dedicated hardware and computer instructions.

Although several modules or units of a device configured to perform operations are mentioned in the above detailed descriptions, such division is not mandatory. Actually, according to the implementations of the present disclosure, features and functions of two or more modules or units described above may be specifically implemented in one module or unit. On the contrary, the features and functions of one module or unit described above may be further divided and embodied by a plurality of modules or units.

Through the foregoing descriptions of the implementations, a person skilled in the art may readily understand that the exemplary implementations described herein may be implemented by software, or may be implemented by combining software with necessary hardware. Therefore, the technical solutions of the implementations of the present disclosure may be implemented in a form of a software product. The software product may be stored in a non-volatile storage medium (which may be a CD-ROM, a universal serial bus (USB) flash drive, a removable hard disk, or the like) or on a network, including several instructions for instructing a computing device (which may be a personal computer, a server, a touch terminal, a network device, or the like) to perform the methods according to the implementations of the present disclosure.

A person skilled in the art can easily figure out other implementations of the present disclosure after considering the description and practicing the disclosure that is disclosed herein. The present disclosure is intended to cover any variations, uses, or adaptive changes of the present disclosure. These variations, uses, or adaptive changes follow the general principles of the present disclosure and include common general knowledge or common technical means in the art, which are not disclosed in the present disclosure.

The present disclosure is not limited to the precise structures described above and shown in the drawings, and various modifications and changes may be made without departing from the scope of the present disclosure. The scope of the present disclosure is only limited to the appended claims.

**Claims**

1. A method for coding multimedia data, executable by an apparatus for coding multimedia data, and comprising:

   encoding a current multimedia frame in multimedia data with reference to a long-term reference frame to obtain a current encoded multimedia frame;
   obtaining coding quality of the long-term reference frame;
   calculating coding quality of the current encoded multimedia frame;
   determining a type of the current encoded multimedia frame according to a motion vector of one or more coding blocks in the current encoded multimedia frame;
   updating the long-term reference frame according to the coding quality of the current encoded multimedia frame, the type of the current encoded multimedia frame, and the coding quality of the long-term reference frame; and
   encoding a to-be-coded multimedia frame in the multimedia data with reference to the updated long-term reference frame.

2. The method according to claim 1, wherein calculating the coding quality of the current encoded multimedia frame comprises:

   calculating, according to a coding manner of the current encoded multimedia frame, a coding cost of each coding block in the current encoded multimedia frame;
   calculating a coding cost of the current encoded multimedia frame according to the coding cost of each coding block; and

determining the coding quality of the current encoded multimedia frame according to the coding cost of the current encoded multimedia frame, wherein the coding cost of the current encoded multimedia frame is in negative correlation with the coding quality.

3. The method according to claim 1 or 2, wherein calculating, according to the coding manner of the current encoded multimedia frame, the coding cost of each coding block in the current encoded multimedia frame comprises:

when a coding process of the current encoded multimedia frame does not comprise precoding, calculating the coding cost of each coding block in the current encoded multimedia frame according to an original coding cost of said coding block; and

when the coding process of the current encoded multimedia frame comprises the precoding, calculating the coding cost of each coding block in the current encoded multimedia frame according to the original coding cost and a precoding cost of said coding block.

4. The method according to any one of claims 1 to 3, wherein calculating the coding cost of each coding block in the current encoded multimedia frame according to the original coding cost of said coding block comprises:
multiplying the original coding cost of said coding block by a quantization parameter of said coding block to obtain the coding cost of said coding block, wherein the quantization parameter enlarges the original coding cost.

5. The method according to any one of claims 1 to 4, wherein calculating the coding cost of each coding block in the current encoded multimedia frame according to the original coding cost and the precoding cost of said coding block comprises:

multiplying the original coding cost of said coding block by a quantization parameter of said coding block to obtain a candidate coding cost of said coding block; and

calculating a weighted sum of the candidate coding cost of said coding block and the precoding cost of said coding block to obtain the coding cost of said coding block, wherein a weight of the candidate coding cost is greater than a weight of the precoding cost.

6. The method according to any one of claims 1 to 5, wherein the determining the type of the current encoded multimedia frame according to the motion vector of the one or more coding blocks in the current encoded multimedia frame comprises:

determining one or more first coding blocks from the one or more coding blocks in the current encoded multimedia frame, wherein amplitude of the motion vector of each first coding block is greater than preset amplitude; and

determining the type of the current encoded multimedia frame according to a quantity of the one or more first coding blocks in the current encoded multimedia frame.

7. The method according to any one of claims 1 to 6, wherein determining the one or more first coding blocks from the current encoded multimedia frame comprises:

determining one or more candidate coding blocks, which are coded using inter-frame prediction, from the one or more coding blocks in the current encoded multimedia frame;

calculating amplitude of the motion vector of each candidate coding block; and

determining, in response to the amplitude of the motion vector of a candidate coding block being greater than the preset amplitude, that the candidate coding block belongs to the one or more first coding blocks.

8. The method according to any one of claims 1 to 7, wherein determining the type of the current encoded multimedia frame according to the quantity of the one or more first coding blocks in the current encoded multimedia frame comprises:

calculating a ratio of the quantity of the one or more first coding blocks in the current encoded multimedia frame to a total quantity of coding blocks in the current encoded multimedia frame;

in response to the ratio being less than or equal to a preset threshold, determining that the current encoded multimedia frame is a low-motion frame; and

in response to the ratio being greater than a preset threshold, determining that the current encoded multimedia frame is a high-motion frame.

9. The method according to any one of claims 1 to 8, wherein updating the long-term reference frame according to the coding quality of the current encoded multimedia frame, the type of the current encoded multimedia frame, and the coding quality of the long-term reference frame comprises:
in response to the current encoded multimedia frame being the low-motion frame and the coding quality of the current encoded multimedia frame being higher than the coding quality of the long-term reference frame, determining a to-be-coded multimedia frame immediately subsequent to the current multimedia frame to serve as the updated long-term reference frame.

10. The method according to any one of claims 1 to 9, wherein:

   the multimedia data comprises a plurality of multimedia frame groups; and
   updating the long-term reference frame according to the coding quality of the current encoded multimedia frame, the type of the current encoded multimedia frame, and the coding quality of the long-term reference frame comprises:

      in response to a count of encoded frames reaching a preset frame quantity,

         setting the count of encoded frames to be zero, and
         updating the long-term reference frame according to the coding quality of the current encoded multimedia frame, the type of the current encoded multimedia frame, and the coding quality of the long-term reference frame,

      wherein the preset frame quantity is an integer smaller than a total quantity of multimedia frames in a multimedia frame group to which the current multimedia frame belongs, and the multimedia frame group is among the plurality of multimedia frame groups.

11. The method according to any one of claims 1 to 10, wherein:

   the multimedia data comprises a plurality of multimedia frame groups; and
   before encoding the current multimedia frame in multimedia data with reference to the long-term reference frame, the method further comprises:
   determining, during encoding of a foremost frame in a multimedia frame group to which the current multimedia frame belongs, the foremost frame as the long-term reference frame, wherein the foremost frame is a key frame in the multimedia frame group.

12. The method according to any one of claims 1 to 11, wherein updating the long-term reference frame according to the coding quality of the current encoded multimedia frame, the type of the current encoded multimedia frame, and the coding quality of the long-term reference frame comprises:
in response to the long-term reference frame being a key frame,

   obtaining a quality weight of the long-term reference frame, wherein the quality weight is in negative correlation with a time interval between the current multimedia frame and the long-term reference frame;
   generating first coding quality of the long-term reference frame according to the quality weight and the coding quality of the long-term reference frame, wherein the first coding quality of the long-term reference frame is lower than the coding quality of the long-term reference frame; and
   updating the long-term reference frame according to the coding quality of the current encoded multimedia frame, the type of the current encoded multimedia frame, and the first coding quality of the long-term reference frame.

13. The method according to any one of claims 1 to 12, wherein encoding the current multimedia frame in multimedia data with reference to the long-term reference frame comprises:

   calculating a difference between a total quantity of reference frames for the multimedia data and a quantity of at least one long-term reference frame for the multimedia data to obtain a quantity of short-term reference frames;
   determining one or more multimedia frames immediately encoded previous to the current multimedia frame as the at least one short-term reference frame; and
   encoding the current multimedia frame with reference to the at least one short-term reference frame and the at least one long-term reference frame comprising the long-term reference frame.

**14.** An apparatus for coding multimedia data, comprising:

an encoding module, configured for encoding a current multimedia frame in multimedia data with reference to a long-term reference frame to obtain a current encoded multimedia frame;
a coding-quality calculating module, configured for:

obtaining coding quality of the long-term reference frame; and
calculating coding quality of the current encoded multimedia frame;

a multimedia-frame-type calculating module, configured for determining a type of the current encoded multimedia frame according to a motion vector of one or more coding blocks in the current encoded multimedia frame; and
a reference-frame updating module, configured for:

updating the long-term reference frame according to the coding quality of the current encoded multimedia frame, the type of the current encoded multimedia frame, and the coding quality of the long-term reference frame; and
encoding a to-be-coded multimedia frame in the multimedia data with reference to the updated long-term reference frame.

**15.** A computer-readable medium, storing a computer program, wherein the computer program when executed by a processor implements the method according to any one of claims 1 to 13.

**16.** An electronic device, comprising:

a processor, and
a memory storing executable instructions of the processor,
wherein the executable instructions when executed by the processor cause the electronic device to perform the method according to any one of claims 1 to 13.

**17.** A computer program product, comprising computer instructions stored in a computer-readable storage medium, wherein:
the computer instructions, when read by a processor of a computer device from the computer-readable storage medium and executed by the processor, cause the computer device to implement the method according to any one of claims 1 to 13.

FIG. 1

Encode a current multimedia frame in multimedia data with reference to a long-term reference frame to obtain a current encoded multimedia frame ⌐ 210

Obtain coding quality of the long-term reference frame and calculate coding quality of the current encoded multimedia frame ⌐ 220

Determine a type of the current encoded multimedia frame according to a motion vector of coding block(s) in the current encoded multimedia frame ⌐ 230

Update the long-term reference frame according to the coding quality of the current encoded multimedia frame, the type of the current encoded multimedia frame, and the coding quality of the long-term reference frame, and encode a to-be-coded multimedia frame in the multimedia data with reference to the updated long-term reference frame ⌐ 240

FIG. 2

Encode a current multimedia frame in multimedia data with reference to a long-term reference frame to obtain a current encoded multimedia frame ⌐ 310

Calculate, according to a coding manner of the current encoded multimedia frame, a coding cost of each coding block in the current encoded multimedia frame ⌐ 320

Calculate a coding cost of the current encoded multimedia frame according to the coding cost of each coding block ⌐ 330

Determine coding quality of the current encoded multimedia frame according to the coding cost of the current encoded multimedia frame, where the coding cost of the current encoded multimedia frame is in negative correlation with the coding quality ⌐ 340

Determine first coding block(s) from the coding block(s) in the current encoded multimedia frame, where amplitude of the motion vector of each first coding block is greater than preset amplitude ⌐ 350

Determine a type of the current encoded multimedia frame according to a quantity of the first coding block(s) in the current encoded multimedia frame ⌐ 360

Obtain coding quality of the long-term reference frame ⌐ 370

When the current encoded multimedia frame is the low-motion frame and the coding quality of the current encoded multimedia frame is higher than the coding quality of the long-term reference frame, a to-be-coded multimedia frame immediately subsequent to the current multimedia frame is determined to serve as the updated long-term reference frame ⌐ 380

FIG. 3

Multimedia frame

| | | | | | | | |
|---|---|---|---|---|---|---|---|

Encoded block

Uncoded block

FIG. 4

501

Encode a current multimedia frame in multimedia data with reference to a long-term reference frame to obtain a current encoded multimedia frame. During encoding of a foremost frame in a multimedia frame group to which the current multimedia frame belongs, the foremost frame is determined as the long-term reference frame, where the foremost frame is a key frame in the multimedia frame group

502

Calculate, according to a coding manner of the current encoded multimedia frame, a coding cost of each coding block in the current encoded multimedia frame

503

Calculate a coding cost of the current encoded multimedia frame according to the coding cost of each coding block

504

Determine coding quality of the current encoded multimedia frame according to the coding cost of the current encoded multimedia frame, wherein the coding cost of the current encoded multimedia frame is in negative correlation with the coding quality

505

Determine first coding block(s) from coding block(s) in the current encoded multimedia frame, where amplitude of the motion vector of each first coding block is greater than preset amplitude

506

Determine a type of the current encoded multimedia frame according to a quantity of the first coding block(s) in the current encoded multimedia frame

507

Obtain coding quality of the long-term reference frame

508

Set a count of encoded frames to be zero when the count of encoded frames reaches a preset frame quantity

No → Long-term reference frame is a key frame?

Yes

509

Obtain a quality weight of the long-term reference frame, where the quality weight is in negative correlation with a time interval between the current multimedia frame and the long-term reference frame

510

Generate first coding quality of the long-term reference frame according to the quality weight and the coding quality of the long-term reference frame, where the first coding quality of the long-term reference frame is lower than the coding quality of the long-term reference frame

511

Update the long-term reference frame according to the coding quality of the current encoded multimedia frame, the type of the current encoded multimedia frame, and the first coding quality of the long-term reference frame

FIG. 5

0/0   1/1   2/2   3/3   4/4   5/5   6/6   7/7   8/8   9/9   10/10

## FIG. 6

7/7   8/8   9/9   10/10   11/11   12/12

## FIG. 7

```
          ┌─────────────────────────┐
          │     Start encoding      │
          └─────────────────────────┘
                      │
                      ▼                          801
┌───────────────────────────────────────────────────┐
│  Set the foremost I frame as a long-term reference frame  │
└───────────────────────────────────────────────────┘
                      │
                      ▼                          802
┌───────────────────────────────────────────────────┐
│           Encode the foremost I frame              │
└───────────────────────────────────────────────────┘
                      │
                      ▼                          803
┌───────────────────────────────────────────────────┐
│                 Encode a P frame                   │
└───────────────────────────────────────────────────┘
                      │
                      ▼                          804
┌───────────────────────────────────────────────────┐
│  Calculate a coding cost and a quantity of high-motion │
│                    macroblocks                     │
└───────────────────────────────────────────────────┘
                      │
   No                 ▼                          805
        ◇─────────────────────────────────────◇
        │  A preset quantity of P frames has been │
        │              encoded ?               │
        ◇─────────────────────────────────────◇
                      │ Yes
                      ▼                          806
┌───────────────────────────────────────────────────┐
│     Select a high-quality, low-motion P frame      │
└───────────────────────────────────────────────────┘
                      │
                      ▼                          807
┌───────────────────────────────────────────────────┐
│  Determine the frame immediately subsequent to the │
│  high-quality, low-motion P frame as the new long- │
│  term reference frame and discard the previous long-│
│            term reference frame                    │
└───────────────────────────────────────────────────┘
```

## FIG. 8

FIG. 9

FIG. 10

1100

| 1101 | 1102 | 1103 |
|---|---|---|
| Processor | Read-only memory ROM | Random access memory RAM |

1104

I/O interface — 1105

| 1106 | 1107 | 1108 | 1109 | 1110 |
|---|---|---|---|---|
| Input part | Output part | Storage part | Communication part | Driver |

Removable medium — 1111

FIG. 11

## INTERNATIONAL SEARCH REPORT

| International application No. |
| --- |
| **PCT/CN2024/111501** |

| | |
| --- | --- |
| **A.** | **CLASSIFICATION OF SUBJECT MATTER** |
| | H04N19/00(2014.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXT, ENTXTC, DWPI, JVET: 门限, 阈值, 长期, 参考, 帧, 质量, 信噪比, 宏块, 运动矢量, 代价, 权重, 数量, Threshold, Long Term, Reference, Frame, Quality, Signal-to-Noise Ratio, Macroblock, Motion Vector, Cost, Weight, Number

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | CN 1759610 A (REGENTS OF THE UNIVERSITY OF CALIFORNIA) 12 April 2006 (2006-04-12) <br> description, pages 2-19, and figures 1-5 | 1-8, 11, 13-17 |
| Y | CN 112995679 A (INTEL CORP.) 18 June 2021 (2021-06-18) <br> description, paragraphs 2-111, and figures 1-5 | 1-8, 11, 13-17 |
| Y | CN 110300305 A (NOVATEK MICROELECTRONICS CO., LTD.) 01 October 2019 (2019-10-01) <br> description, paragraphs 2-47, and figures 1-5 | 2-5 |
| A | WO 2020019354 A1 (SZ DJI TECHNOLOGY CO., LTD.) 30 January 2020 (2020-01-30) <br> entire document | 1-17 |
| A | LI, Weiran et al. "CE11: HEVC-like encoder only solution for composite reference picture" <br> *Joint Video Experts Team (JVET) of ITU-T SG 16 WP 3 and ISO/IEC JTC 1/SC 29/ WG 11 11th Meeting: Ljubljana, SI, 10-18 July 2018, Document: JVET-K0157-v2,* <br> 18 July 2018 (2018-07-18), <br> entire document | 1-17 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 October 2024** | **12 October 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111501**

| Patent document cited in search report | | | Publication date (day/month/year) | Patent family member(s) | | | Publication date (day/month/year) |
|---|---|---|---|---|---|---|---|
| CN | 1759610 | A | 12 April 2006 | WO | 2004064373 | A2 | 29 July 2004 |
| | | | | EP | 1582064 | A2 | 05 October 2005 |
| | | | | US | 2006098738 | A1 | 11 May 2006 |
| | | | | JP | 2006518560 | A | 10 August 2006 |
| CN | 112995679 | A | 18 June 2021 | US | 2020120342 | A1 | 16 April 2020 |
| | | | | DE | 102020128902 | A1 | 17 June 2021 |
| CN | 110300305 | A | 01 October 2019 | US | 2019297345 | A1 | 26 September 2019 |
| WO | 2020019354 | A1 | 30 January 2020 | US | 2021136381 | A1 | 06 May 2021 |
| | | | | CN | 110800297 | A | 14 February 2020 |
| | | | | EP | 3823282 | A1 | 19 May 2021 |

Form PCT/ISA/210 (patent family annex) (July 2022)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023110952664